(19) **Europäisches Patentamt**
**European Patent Office**
**Office européen des brevets**

(11) **EP 4 079 134 B1**

(12) **EUROPEAN PATENT SPECIFICATION**

(45) Date of publication and mention
of the grant of the patent:
**28.08.2024   Bulletin 2024/35**

(51) International Patent Classification (IPC):
*A01D 34/00* (2006.01)       *G05D 1/00* (2024.01)
*G05D 105/15* (2024.01)       *G05D 109/10* (2024.01)

(21) Application number: **22169300.5**

(22) Date of filing: **21.04.2022**

(52) Cooperative Patent Classification (CPC):
**A01D 34/008; G05D 1/247; G05D 1/6484;**
**G05D 1/693;** G05D 2105/15; G05D 2107/23;
G05D 2109/10; G05D 2111/36

(54) **SELF-PROPELLED VEHICLE WITH CORRESPONDENT CONTROLLING METHOD AND SYSTEM COMPRISING A PLURALITY OF SELF-PROPELLED VEHICLES WITH CORRESPONDENT CONTROLLING METHOD**

SELBSFAHRENDES FAHRZEUG UND STEUERUNGSVERFAHREN UND SYSTEM BESTEHEND AUS MEHRERE SELBSTFAHRENDE FAHRZEUGE UND STEUERUNGSVERFAHREN

VÉHICULE AUTOMOTEUR ET MÉTHODE DE CONTROLE ET SYSTÈME COMPRENANT PLUSIEURS VÉHICULES AUTOMOTEURS ET MÉTHODE DE CONTROLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.04.2021   IT 202100010295**
**22.04.2021   IT 202100010286**
**04.06.2021   IT 202100014660**

(43) Date of publication of application:
**26.10.2022   Bulletin 2022/43**

(73) Proprietor: **Stiga S.p.A. in breve anche St. S.p.A.**
**31033 Castelfranco Veneto (TV) (IT)**

(72) Inventors:
 • **SCAPIN, Michele**
   **36061 Bassano del Grappa (VI) (IT)**

 • **SOLANO, Marco**
   **Vedelago (TV) (IT)**
 • **MORGAN, Alessandro**
   **Refrontolo (TV) (IT)**
 • **NEDORUBAN, Eugeniu**
   **Castelfranco Veneto (TV) (IT)**
 • **CECCHETTO, Mauro**
   **35018 San Martino di Lupari (PD) (IT)**
 • **CERCHIARO, Loris**
   **Fontaniva (PD) (IT)**

(74) Representative: **PGA S.p.A.**
**Via Mascheroni, 31**
**20145 Milano (IT)**

(56) References cited:
**EP-A1- 3 698 620       EP-A1- 3 794 921**
**US-A1- 2020 073 403**

## Description

## Technical field

The present disclosure relates to the field of self-propelled vehicles and relates to the field of control systems and methods for said self-propelled vehicles.

## Background Art

Self-propelled vehicles are vehicles typically provided with a motor and at least one traction wheel or roller suited to allow the movimentation of the vehicle on a ground or floor. The self-propelled vehicles can be used for a number of applications including, for example, cutting grass and/or washing or vacuuming floors, waxing floors, shredding and/or collecting leaves on a lawn.

It is known that such self-propelled vehicles typically employ a battery for the power supply of the motor.

It is also known that such self-propelled vehicles are configured to move in a certain area of a ground or floor and that such a certain area is defined by an electrically conductive wire on which a driving signal for the self-propelled vehicle is transmitted in use.

Such a driving signal is radiated as an electromagnetic field by the wire, and spreads in the aforesaid area, and can thus be received by the self-propelled vehicle. The self-propelled vehicle determines its own position by virtue of said electromagnetic field.

The Applicant has observed that although today's batteries have sufficient capacity to be able to power even large self-propelled vehicles, where the area in which the self-propelled vehicle must operate is sufficiently large, it may be necessary or in any case convenient to use multiple self-propelled vehicles.

Multiple self-propelled vehicles within the same area delimited by said wire can also move in substantial temporal simultaneity.

The Applicant has also observed that in certain environments there may be contiguous and/or at least partially overlapping areas, each delimited by its own wire, and in each of said contiguous and/or at least partially overlapping areas there is a self-propelled vehicle.

In both cases mentioned above, a situation of potential interference of driving signals can arise. A self-propelled vehicle is located near another work area for a further self-propelled vehicle, and can thus receive a signal that is actually intended for a further self-propelled vehicle. Where two self-propelled vehicles move within the same area delimited by a single wire, there is a problem of how to separately control, through the driving signal, the first from the second self-propelled vehicle.

The object of the present invention is therefore to describe a self-propelled vehicle and a method for controlling the same which allow to solve the disadvantages described above.

Document EP3794921A1 discloses a utility system comprising a boundary wire loop, a utility vehicle and a charging system. The boundary wire loop is arranged to carry an electric current and generate a first magnetic field, a working area being defined by the boundary wire loop. The utility vehicle is configured to move within the working area and to detect magnetic fields to assist its navigation. The charging system comprises a charging station for receiving and charging the utility vehicle and a charging station wire loop arranged to carry an electric current and generate a second magnetic field. A portion of the charging station wire loop is disposed adjacent a portion of the boundary wire loop such that when current flows in both wire loops the respective magnetic fields from the adjacent portions are cancelled. The charging system is configured so that electric current is provided to the charging station wire loop to generate the second magnetic field if the charging station is capable of receiving and charging the utility vehicle. EP 3 689 620 discloses a further example of self-propelled vehicle interacting with a boundary wire.

## Table of contents

The object of the invention is described here below in some of its main aspects. Such aspects can be combined with each other and/or with portions of the detailed description and/or with the claims.

## Independent aspects of the invention

A first independent aspect of the invention relates to a self-propelled vehicle (10) configured to carry out maintenance on a ground or floor (100), in particular a self-driving robot lawnmower, comprising:

- a plurality of wheels or rollers (11), configured to allow the movement of the self-propelled vehicle (10) on said ground or floor (100),
- a motor coupled to at least one wheel or one roller of said plurality of wheels or rollers (11) so as to make said wheel a drive wheel or said roller a driving roller,
- at least one electromagnetic signal receiving element (12', 12") configured to receive, in use, a driving signal (30) of the electromagnetic type, transmitted through a wire (201) delimiting an area of said ground or floor (100),
- a receiver stage (12r), operatively connected with said at least one electromagnetic signal receiving element (12', 12"),
- a data processing unit (13) operationally, optionally electrically, connected to the electromagnetic signal receiving element (12', 12"), and configured to electronically process the driving signal (30) received by means of said at least one electromagnetic signal receiving element (12', 12") in order to determine a positional relationship between said wire (201) and the self-propelled vehicle (10),

wherein said data processing unit (13) is configured to control a cycle (400) of activation and deactivation of said receiver stage (12r), the control of said cycle (400) of activation and deactivation presupposing, in accordance with a predetermined activation and/or deactivation criterion, that said receiver stage (12r) is activated at least once, within said cycle (400), for a predetermined time interval (Ton) of activation, and that said receiver stage (12r) is deactivated at least once, within said cycle (400), for a predetermined time interval (Toff) of deactivation, in order to allow the reception and/or the electronic processing of the driving signal (30) in the predetermined time interval (Ton) of activation only.

A second independent aspect of the invention relates to a control method of a self-propelled vehicle (10) configured to carry out maintenance on a ground or floor (100), in particular a control method of a self-driving robot lawnmower, the method comprising:

- a reception step (1002) of a driving signal (30) transmitted through a wire (201) delimiting an area of said ground or floor (100) and apt to cause, when received by the self-propelled vehicle (10), an identification of a working perimeter defined by the wire (201) and/or a determination of the position of the self-propelled vehicle (10) in the area of said ground or floor (100) delimited by the wire (201);

- a driving step (1003) of the self-propelled vehicle (10) comprising at least one activation step of at least one motor of the self-propelled vehicle (10) so as to cause a movement of the self-propelled vehicle (10) on said ground or floor (100),

    wherein the method includes an activation and deactivation cycle of a receiver stage (12r) of the self-propelled vehicle (10), the activation and deactivation cycle of the receiver stage (12r) comprising:

    - a cyclic activation (1001) of said receiver stage (12r) for a predetermined time interval (Ton) of activation and
    - a cyclic deactivation (1004) of said receiver stage (12r) for a predetermined time interval (Toff) of deactivation,

    wherein the electronic reception and/or processing of the driving signal (30) are allowed only in the predetermined time interval (Ton) of activation, and in which the cyclical activation and the cyclical deactivation of said receiver stage (12r) take place according to a predetermined activation and/or deactivation criterion.

A third independent aspect of the invention relates to a maintenance system for a ground or floor (100), said system comprising at least a first self-propelled vehicle (10) and a second self-propelled vehicle (10'), both the first self-propelled vehicle (10) and the second self-propelled vehicle (10') being in particular self-driving robot lawnmowers, in which each of the first self-propelled vehicle (10) and the second self-propelled vehicle (10') comprises:

- a plurality of wheels or rollers (11), configured to allow the movement on said ground or floor (100),

- a motor coupled to at least one wheel or one roller of said plurality of wheels or rollers (11) so as to make said wheel a drive wheel or said roller a driving roller,

- at least one electromagnetic signal receiving element (12', 12") configured to receive, in use, an electromagnetic driving signal, the driving signal of said first self-propelled vehicle (10) being a first driving signal (30) transmitted through a first wire (201) delimiting an area of said ground or floor (100), the driving signal of said second self-propelled vehicle (10') being a second driving signal (30') transmitted through said first wire (201) delimiting said area of said ground or floor (100) or through a second wire (201') delimiting a further area of said ground or floor (100),

- a receiver stage (12r), operatively connected with said at least one electromagnetic signal receiving element (12', 12"),

- a data processing unit (13) operatively, optionally electrically, connected to the electromagnetic signal receiving element (12', 12"), the data processing unit (13) of said first self-propelled vehicle (10) being configured to electronically process the first driving signal (30) in order to determine a positional relationship between said first wire (201) and the first self-propelled vehicle (10), the data processing unit (13) of said second self-propelled vehicle (10') being configured to electronically process the second driving signal (30') so as to determine a positional relationship between said first wire (201) and the second self-propelled vehicle (10') or between said second wire (201') and the second self-propelled vehicle (10'),

wherein said data processing unit (13) of said first self-propelled vehicle (10) is configured to control a cycle (400) of activation and deactivation of said receiver stage (12r) of said first self-propelled vehicle (10), the control of said cycle (400) of activation and deactivation presupposing, in accordance with a predetermined first activation and/or deactivation criterion, that said receiver stage (12r) of said first self-propelled vehicle (10) is activated at least once, within said cycle (400), for a predetermined first time interval (Ton) of activation and that said receiver stage (12r) of said first self-propelled vehicle (10) is deactivated at least once, within said cycle (400), for a predetermined first time interval (Toff) of deactivation, in order to allow the reception and/or electronic processing of the first driving signal (30) only in the predetermined first time interval (Ton) of activation and in which said data processing unit (13) of said second self-propelled vehicle (10') is configured to control a cycle (400) of activation and deactivation of said receiver stage (12r) of said second self-propelled vehicle (10'), the control of said cycle (400) of activation and deactivation presupposing, in accordance with a predetermined second activation and/or deactivation criterion, that said receiver stage (12r) of said second self-propelled vehicle (10') is activated at least once, within said cycle (400), for a predetermined second time interval (Ton) of activation and that said receiver stage (12r) of said second self-propelled vehicle (10') is deactivated at least once, within said cycle (400), for a predetermined second time interval (Toff) of deactivation, in order to allow the reception and/or electronic processing of the second driving signal (30') only in the predetermined second time interval (Ton) of activation.

A fourth independent aspect of the invention relates to a control method of a first self-propelled vehicle (10) and of a second self-propelled vehicle (10') each configured to carry out maintenance on a ground or floor (100), the first self-propelled vehicle (10) and the second self-propelled vehicle (10') being in particular self-driving robot lawnmowers, the method comprising:

-    a reception step (1002) of a first driving signal (30) transmitted through a first wire (201) delimiting an area of said ground or floor (100) and apt to cause, when received by the first self-propelled vehicle (10), an identification of a working perimeter defined by the first wire (201) and/or a determination of the position of the first self-propelled vehicle (10) in the area of said ground or floor (100) delimited by the first wire (201);

-    a reception step (1002) of a second driving signal (30') transmitted through said first wire (201) delimiting said area of said ground or floor (100) or through a second wire (201') delimiting a further area of said ground or floor (100) and apt to cause, when received by the second self-propelled vehicle (10'), an identification of a working perimeter defined by the first wire (201) and/or by the second wire (201') and/or a determination of the position of the second self-propelled vehicle (10') in the area of said ground or floor (100) delimited by the first wire (201) and/or in the further area of said ground or floor (100) delimited by the second wire (201');

-    a driving step (1003) of the first self-propelled vehicle (10) and of the second self-propelled vehicle (10') comprising at least one activation step of at least one motor of the first self-propelled vehicle (10) and of at least one motor of the second self-propelled vehicle (10') in order to cause a movimentation on said ground or floor (100),

wherein the method includes:

-    a cycle of activation and deactivation of a receiver stage (12r) of the first self-propelled vehicle (10), the cycle of activation and deactivation of the receiver stage (12r) of the first self-propelled vehicle (10) comprising:

    ▪ a cyclical activation (1001) of said receiver stage (12r) of the first self-propelled vehicle (10) for a predetermined first time interval (Ton) of activation and

    ▪ a cyclical deactivation (1004) of said receiver stage (12r) of the first self-propelled vehicle (10) for a predetermined first time interval (Toff) of deactivation and

-    a cycle of activation and deactivation of a receiver stage (12r) of the second self-propelled vehicle (10'), the cycle of activation and deactivation of the receiver stage (12r) of the second self-propelled vehicle (10') comprising:

    ▪ a cyclical activation (1001) of said receiver stage (12r) of the second self-propelled vehicle (10') for a predetermined second time interval (Ton) of activation and
    ▪ a cyclical deactivation (1004) of said receiver stage (12r) of the second self-propelled vehicle (10') for a predetermined second time interval (Toff) of deactivation,

wherein the reception and/or electronic processing of the first driving signal (30) and of the second driving signal (30') are allowed, respectively, in the predetermined first time interval (Ton) of activation only and in the predetermined second time interval (Ton) of activation only, and in which the cyclical activation and the cyclical deactivation of said receiver stage (12r) of the first self-propelled vehicle (10) and the cyclical activation and the cyclical deactivation of said receiver stage (12r) of the second self-propelled vehicle (10') take place, respectively, according to a predetermined first activation and/or deactivation criterion and according to a predetermined second activation and/or deactivation criterion.

Self-propelled vehicle

A self-propelled vehicle (10) is described herein, configured to carry out maintenance on a ground or floor (100), and in which the self-propelled vehicle (10) comprises:

-    a plurality of wheels or rollers (11), configured to allow the movement of the self-propelled vehicle (10) on said ground or floor (100), in which at least one wheel or roller of said plurality of wheels or rollers (11) is a drive wheel or roller;

- at least one electromagnetic signal receiving element (12', 12") configured to receive, in use, a driving signal (30) of the electromagnetic type, transmitted through a wire (201) delimiting said ground o floor (100),

- a receiver stage (12r), operatively connected with the at least one electromagnetic signal receiving element (12', 12"),

- a data processing unit (13) operationally, optionally electrically, connected to the electromagnetic signal receiving element (12', 12"), and configured to electronically process the driving signal (30) received by means of said at least one electromagnetic signal receiving element (12', 12") in order to determine a positional relationship between said wire (201) and the self-propelled vehicle (10),

- said data processing unit (13) being configured to control a cycle (400) of activation and deactivation of said receiver stage (12r) and being configured to deactivate at least once, within said cycle (400), said receiver stage (12r) for a predetermined time interval (Toff) of deactivation, in which the driving signal (30) is not received and/or processed electronically, and to activate at least once, within said cycle (400), said receiver stage (12r) for a predetermined time interval (Ton) of activation, in order to allow the reception and/or electronic processing of the driving signal (30), according to a predetermined activation and/or deactivation criterion.

According to a further non-limiting aspect, said predetermined activation and/or deactivation criterion is such that the predetermined time interval (Toff) of deactivation corresponds to a time interval in which on a further wire (201') a driving signal (30) is transmitted for a further self-propelled vehicle (10') operating on a further area of said ground or floor (100) delimited by said further wire (201') and/or corresponds to a time interval in which on said wire (201) a driving signal (30) is transmitted for a further self-propelled vehicle (10') operating on the area of said ground or floor (100) delimited by said wire (201).
According to a further non-limiting aspect, the driving signal (30) comprises at least a first portion having a predetermined identification coding (30i), in particular a predetermined identification coding (30i), said identification coding (30i) being configured to allow a univocal identification of a charging base (200) for the self-propelled vehicle (10) transmitting said driving signal (30) and/or being configured to allow a univocal identification of said self-propelled vehicle (10) and/or being configured to allow a univocal identification of the specific destination of the driving signal (30) to said self-propelled vehicle (10) and/or being configured to determine and/or modify at least one of: the predetermined time interval (Toff) of deactivation, the predetermined time interval (Ton) of activation, a time length of said cycle (400).
According to a further non-limiting aspect, the driving signal (30) comprises at least one portion intended to cause the activation of the receiver stage (12r) for a predetermined time interval (Ton) of activation in which driving signals (30') intended for further self-propelled vehicles (10') are not transmitted, and/or the driving signal comprises at least one portion intended to cause a deactivation of the receiver stage (12r) for a predetermined time period (Toff) of deactivation in which further driving signals (30') intended for further self-propelled vehicles (10') are transmitted on the wire (201) or on further wires (201') close thereto.
According to a further non-limiting aspect, said predetermined time interval (Ton) of activation is sufficient to cause a reception, in particular an integral reception, of at least said first portion having said predetermined identification coding (30i).
According to a further non-limiting aspect, the self-propelled vehicle (10) is configured to allow a selection of a certain reception channel among a plurality of reception channels (Ch1, Ch2), for the reception of said driving signal (30), optionally being configured to allow a tuning of said receiver stage (12r) on a certain reception channel among a plurality of reception channels (Ch1, Ch2), for the reception of said driving signal (30).
According to a further non-limiting aspect, the self-propelled vehicle (10) comprises a motor, in particular an electric motor, electrically connected and selectively powered by the battery (10b); said electric motor being mechanically connected with at least said drive wheel or roller.
According to a further non-limiting aspect, the self-propelled vehicle (10) comprises a rechargeable battery (10b), and is configured to allow charging the battery (10b) when in correspondence with a base (200) for controlling and/or charging the self-propelled vehicle (10) by means of a transfer of electrical energy from the base (200) to the battery (10b).
According to a further non-limiting aspect, the self-propelled vehicle (10) comprises a wireless receiver configured to establish a data communication channel with a wireless communication module (308) of the base (200), said wireless receiver being configured to establish said data communication channel when the self-propelled vehicle (10) is in correspondence with said base (200).
According to a further non-limiting aspect, the at least one electromagnetic signal receiving element (12', 12") comprises a coil.
According to a further non-limiting aspect, the data processing unit (13), powered by said battery and operationally connected to said motor, is configured at least to manage an at least partially automatic control of the movimentation of the self-propelled vehicle (10) relative to the wire (201).

According to a further non-limiting aspect, the self-propelled vehicle (10) comprises a first and a second electromagnetic signal receiving element (12', 12"), and the data processing unit (13) is electrically connected to the first and to the second electromagnetic signal receiving element (12', 12").

According to a further non-limiting aspect, the receiver stage (12r) is operatively connected with the first and the second electromagnetic signal receiving element (12', 12").

According to a further non-limiting aspect, the data processing unit (13) is configured to determine the position of the self-propelled vehicle (10) with respect to said wire (201) in accordance with a power and/or a polarity at least temporarily assumed by the driving signal (30).

According to a further non-limiting aspect, the first and the second electromagnetic signal receiving element (12', 12") are configured and specifically intended to allow the data processing unit (13) to determine said power and/or polarity at least temporarily assumed by the driving signal (30).

According to a further non-limiting aspect, the data processing unit (13) is operatively connected with the receiver stage (12r), optionally being electrically connected with the receiver stage (12r).

According to a further non-limiting aspect, the first and the second electromagnetic signal receiving element (12', 12") respectively comprise a first and a second coil.

According to a further non-limiting aspect, the first portion comprises a predefined binary coding.

According to a further non-limiting aspect, the predefined binary coding is uniquely associated with said self-propelled vehicle (10).

According to a further non-limiting aspect, the self-propelled vehicle (10) is configured to store a copy of the predetermined identification coding (30i) and is configured to electronically, optionally automatically, compare the predetermined identification coding (30i) received with the driving signal (30) with a copy of a predetermined identification coding (30i), in order to set at least one of the predetermined time interval (Toff) of deactivation, the predetermined time interval (Ton) of activation, according to an electronic datum attached to, or associated with, the aforesaid copy for which the identity has been determined if said electronic comparison determines an identity between the predetermined identification coding (30i) and the copy of the predetermined identification coding (30i).

According to a further non-limiting aspect, the data processing unit (13) is configured to store a copy of the predetermined identification coding (30i) and is configured to electronically compare, optionally automatically, the predetermined identification coding (30i) received with the driving signal (30) with a copy of a predetermined identification coding (30i), to set at least one of the predetermined time interval (Toff) of deactivation, the predetermined time interval (Ton) of activation, according to an electronic datum attached to, or associated with, the aforesaid copy for which the identity has been determined if said electronic comparison determines an identity between the predetermined identification coding (30i) and the copy of the predetermined identification coding (30i).

According to a further non-limiting aspect, the data processing unit (13) contains stored a copy of said binary coding, and said data processing unit (13) is configured to carry out an electronic comparison between the binary coding of the first portion of the driving signal received in use by the receiver stage (12r) with said copy of said binary coding.

According to a further non-limiting aspect, the data processing unit (13) is configured to cause a movimentation and/or a control of the movimentation of the self-propelled vehicle (10) according to said predetermined identification coding (30i).

According to a further non-limiting aspect, the predetermined identification coding (30i) contains data related to a position assumed by a further self-propelled vehicle (10'), and the data processing unit (13) is configured to move and/or control a movement of the self-propelled vehicle (10') so as to avoid a collision between the self-propelled vehicle (10) and the further self-propelled vehicle (10').

According to a further non-limiting aspect, the self-propelled vehicle (10) comprises a motor, in particular an electric motor, electrically connected and selectively powered by the battery (10b); said electric motor being mechanically connected with at least said drive wheel or roller.

According to a further non-limiting aspect, the self-propelled vehicle (10) comprises a rechargeable battery (10b), and is configured to allow charging the battery (10b) when in correspondence with a base (200) for controlling and/or charging the self-propelled vehicle (10) by means of a transfer of electrical energy from the base (200) to the battery (10b).

According to a further non-limiting aspect, the self-propelled vehicle (10) comprises a wireless receiver configured to establish a data communication channel with a wireless communication module (308) of the base (200), said wireless receiver being configured to establish said data communication channel when the self-propelled vehicle (10) is in correspondence with said base (200).

According to a further non-limiting aspect, the at least one electromagnetic signal receiving element (12', 12") comprises a coil.

According to a further non-limiting aspect, the data processing unit (13), powered by said battery and operationally connected to said motor, is configured at least to manage an at least partially automatic control of the movimentation of the self-propelled vehicle (10) relative to the wire (201).

According to a further non-limiting aspect, the self-propelled vehicle (10) comprises a first and a second electromagnetic signal receiving element (12', 12"), and the data processing unit (13) is electrically connected to the first and to the second electromagnetic signal receiving element (12', 12").

According to a further non-limiting aspect, the first and the second electromagnetic signal receiving element (12', 12") respectively comprise a first and a second coil.

According to a further non-limiting aspect, the self-propelled vehicle (10) comprises a conditioning circuit, operationally connected to said at least one electromagnetic signal receiving element (12', 12"); said conditioning circuit being configured to carry out a filtering of an undesired electromagnetic noise, and/or to perform an amplification of the driving signal (30) received through the at least one electromagnetic signal receiving element (12', 12").

According to a further non-limiting aspect, the self-propelled vehicle (10) comprises a motor, operatively connected to said battery, said motor being configured to cause at least the actuation of said drive wheel or roller.

According to a further non-limiting aspect, the self-propelled vehicle (10) is a lawnmower.

Control method

In accordance with a further aspect, a method is herein disclosed for controlling a self-propelled vehicle (10) configured to carry out maintenance of a ground or floor (100), the method comprising:

- a reception step (1002) a driving signal (30) suited to cause, when received by the self-propelled vehicle (10), an identification of a working perimeter defined by the wire (201) and/or a determination of the position of the self-propelled vehicle (10) in an area of said ground or floor (100) delimited by a wire (201) on which said driving signal (30) is transmitted in use;

- a driving step (1003) of the self-propelled vehicle (10) comprising at least one activation step of at least one motor of the self-propelled vehicle (10) so as to cause a movimentation thereof on said ground or floor (100), in which

- the method comprising an activation and deactivation cycle of a receiver stage (12r) of the self-propelled vehicle (10), in turn comprising:

  ○ a cyclical deactivation (1004) of said receiver stage (12r) for a predetermined time interval (Toff) of deactivation, in which the driving signal (30) is not received and/or processed electronically,

  ○ a cyclical activation (1001) of said receiver stage (12r) for a predetermined time interval (Ton) of activation, so as to allow the reception and/or electronic processing of the driving signal (30),

  in which cyclical deactivation and cyclical activation of said receiver stage (12r) take place according to a predetermined activation and/or deactivation criterion.

According to a further non-limiting aspect, in the method, the predetermined activation and/or deactivation criterion is such that the predetermined time interval (Toff) of deactivation corresponds to a time interval in which on a further wire (201') a driving signal (30) is transmitted for a further self-propelled vehicle (10') operating on a further area of said ground or floor (100) delimited by said further wire (201') and/or corresponds to a time interval in which on said wire (201) a driving signal (30) is transmitted for a further self-propelled vehicle (10') operating on the area of said ground or floor (100) delimited by said wire (201).

According to a further non-limiting aspect, the reception step comprises a selection of a certain reception channel, among a plurality of reception channels (Ch1, Ch2), for carrying out the reception step of the driving signal (30), optionally the reception step comprising tuning a receiver stage (12r) of said self-propelled vehicle (10) on a certain reception channel, among a plurality of reception channels (Ch1, Ch2).

According to a further non-limiting aspect, said selection of said determined reception channel is at least partially carried out electronically.

According to a further non-limiting aspect, within said cycle, the cyclical deactivation step follows the cyclical activation step.

According to a further non-limiting aspect, the method comprises a generation step of said driving signal (30) comprising the generation of at least one first portion of said driving signal (30) having a predetermined identification coding (30i), said identification coding (30i) being configured to allow a univocal identification of a charging base (200) for the self-propelled vehicle (10) transmitting said driving signal (30) and/or being configured to allow a univocal identification of said self-propelled vehicle (10) and/or being configured to allow a univocal identification of the specific destination of the driving signal (30) to said self-propelled vehicle (10) and/or being configured to determine and/or modify at least one of: the predetermined time interval (Toff) of deactivation, the predetermined time interval (Ton) of activation, a time length of said cycle (400).

According to a further non-limiting aspect, the cyclical activation (1001) of the receiver stage (12r) takes place for a predetermined time interval (Ton) of activation sufficient to cause a reception, in particular a full reception of the said first portion having said predetermined identification coding (30i).

According to a further non-limiting aspect, the method comprises a step of storing and/or adapting at least one of the time length of said cycle (400), the predetermined time interval (Toff) of deactivation, the predetermined time interval (Ton) of activation, according to said first portion and/or according to the predetermined identification coding (30i).

According to a further non-limiting aspect, the method, following the reception step of the driving signal (30), comprises an electronic comparison, optionally automatic, between the predetermined identification coding (30i), and a copy of a predetermined identification coding (30i), stored in a memory operatively accessible to the data processing unit (13), and if said electronic comparison determines an identity, the method comprises a step of setting at least one of the predetermined time interval (Toff) of deactivation, the predetermined time interval (Ton) of activation, according to an electronic data attached to, or associated with, to the aforesaid copy for which the identity has been determined.

According to a further non-limiting aspect, the method, following the reception step of the driving signal (30), comprises an electronic comparison, optionally automatic, between the binary sequence extracted from the predetermined identification coding (30i), and a copy of the binary sequence extracted from the predetermined identification coding (30i), stored in a memory operatively accessible to the data processing unit (13), and if said electronic comparison determines an identity, the method comprises a step of setting at least one of the predetermined time interval (Toff) of deactivation, the predetermined time interval (Ton) of activation, according to an electronic data attached to, or associated with, the aforesaid copy for which the identity has been determined.

According to a further non-limiting aspect, in which the predetermined identification coding (30i) contains data related to a position assumed by a further self-propelled vehicle (10'), and the method comprises a movimentation and/or a movement control of the self-propelled vehicle (10) so as to avoid a collision between the self-propelled vehicle (10) and the further self-propelled vehicle (10').

According to a further non-limiting aspect, in correspondence with said time interval (Toff) of deactivation, the driving signal does not carry data useful for controlling the position of the said self-propelled vehicle (10).

According to a further non-limiting aspect, the cyclical activation (1003) of said receiver stage (12r) takes place for a predetermined time interval (Ton) of activation in which driving signals (30') intended for further self-propelled vehicles (10') are not transmitted, and/or the cyclical deactivation (1004) of the receiver stage (12r) takes place for a predetermined time period (Toff) of deactivation in which further driving signals (30') intended for further self-propelled vehicles (10') are transmitted on the wire (201) or on further wires (201') close thereto.

According to a further non-limiting aspect, the method comprises a reception step of the driving signal (30) on a first and a second electromagnetic signal receiving element (12', 12") of the self-propelled vehicle (10), said first and said second electromagnetic signal receiving element (12', 12") being operatively connected with the receiver stage (12r).

According to a further non-limiting aspect, the method comprises a step of electronically determining a position of the self-propelled vehicle (10) with respect to the wire (201) in accordance with a power and/or a polarity at least temporarily assumed by the driving signal (30).

According to a further non-limiting aspect, the method comprises determining the power and/or polarity at least temporarily assumed by the driving signal (30) through the first and the second electromagnetic signal receiving element (12', 12").

According to a further aspect, a method is described herein for controlling a first and a second self-propelled vehicle (10, 10'), each configured to carry out maintenance of a ground or floor (100), the method comprising

- a reception step (1002) of a first driving signal (30) suited to cause, when received by the first self-propelled vehicle (10), an identification of a working perimeter defined by a first wire (201) and/or a determination of the position of the first self-propelled vehicle (10) in an area of said ground or floor (100) delimited by the first wire (201) on which said first driving signal (30) is transmitted in use;

- a reception step (1002) of a second driving signal (30') suited to cause, when received by the second self-propelled vehicle (10'), an identification of a working perimeter defined by the first wire (201) and/or by a second wire (201') and/or a determination of the position of the second self-propelled vehicle (10') in an area of said ground or floor (100) delimited by the first wire (201) and/or by the second wire (201') on which said second driving signal (30') is transmitted;

- a driving step (1003) of the first and the second self-propelled vehicles (10, 10') comprising at least one activation step of at least one motor of the first and/or the second self-propelled vehicle (10, 10') so as to cause a movimentation thereof on said ground or floor (100), in which

- the method comprising:

  ○ an activation and deactivation cycle of a receiver stage (12r) of the first self-propelled vehicle (10), in turn comprising:

■ a cyclical deactivation (1004) of said receiver stage (12r) for a predetermined time interval (Toff) of deactivation, in which the first driving signal (30) is not received and/or processed electronically,

■ a cyclical activation (1001) of said receiver stage (12r) for a predetermined time interval (Ton) of activation, so as to allow the reception and/or electronic processing of the first driving signal (30),

○ an activation and deactivation cycle of a receiver stage (12r) of the second self-propelled vehicle (10'), in turn comprising:

■ a cyclical deactivation (1004) of said receiver stage (12r) for a predetermined time interval (Toff) of deactivation, in which the second driving signal (30') is not received and/or processed electronically,

■ a cyclical activation (1001) of said receiver stage (12r) for a predetermined time interval (Ton) of activation, so as to allow the reception and/or electronic processing of the second driving signal (30'),

in which the cyclic activation of the receiver stage (12r) of the first self-propelled vehicle (10) is temporally offset, in particular not overlapping, with respect to the cyclic activation of the receiver stage (12r) of the second self-propelled vehicle (10').

According to a further non-limiting aspect, the method comprises the transmission of the first driving signal (30) and the further driving signal (30') and/or the first and second driving signal (30, 30') on a single wire (210).

According to a further non-limiting aspect, the method comprises the transmission of the first driving signal (30) on a first wire and comprises the transmission of the second driving signal (30') on a second wire (201').

According to a further non-limiting aspect, the method comprises the transmission of the first driving signal (30) and the second driving signal (30') on the wire (201).

According to a further non-limiting aspect, the method comprises a tuning step between a first base (200) for charging and/or controlling self-propelled vehicles and a second base (200') for charging and/or controlling self-propelled vehicles, said tuning step being configured and specifically intended to cause a temporal separation between the transmission of the first driving signal (30) from the second driving signal (30') and/or being configured and specifically intended to cause a tuning of the activation and deactivation cycle of a receiver stage (12r) of the first self-propelled vehicle (10) with the activation and deactivation cycle of a receiver stage (12r) of the second self-propelled vehicle (10') such that the cyclic activation of the receiver stage (12r) of the first self-propelled vehicle (10) is temporally offset, in particular not overlapping, the cyclic activation of the receiver stage (12r) of the second self-propelled vehicle (10').

Charging base

According to the present disclosure, a charging base (200) for a self-propelled vehicle (10) is described herein, optionally a self-propelled vehicle (10) in accordance with one or more of the aspects described herein, said charging base (200) comprising:

- a control unit configured to cause the generation of a driving signal (30) for said self-propelled vehicle, and

- an outlet or connector, connected to the control unit, configured to be connected with a wire (201) arranged on a ground or floor (100) and intended to delimit a working area of the self-propelled vehicle (10).

According to a further non-limiting aspect, the charging base 200 is configured and specifically intended to cause a control of the self-propelled vehicle 10 in accordance with the method according to one or more of the aspects described herein.

According to a further non-limiting aspect, the control unit is configured to transmit said driving signal (30) in first given periods of time and to interrupt the transmission of said driving signal (30) in second given periods of time, in which at least a first given period of time and in which at least a second given period of time determine the cycle (400) of activation and deactivation of the receiver stage (12r) of the self-propelled vehicle (10).

According to a further non-limiting aspect, the control unit is configured to generate a driving signal (30) comprising at least a first portion (30') having a predetermined identification coding (30i), in particular a predetermined identification coding (30i) configured to allow a univocal identification of a charging base (200) transmitting said driving signal (30) and/or configured to allow a univocal identification of said self-propelled vehicle (10) and/or configured to allow a univocal identification of the specific destination of the driving signal (30) to said self-propelled vehicle (10) and/or configured to determine and/or modify at least one of: the predetermined time interval (Toff) of deactivation, the predetermined time interval (Ton) of activation, a time length of said cycle (400).

According to a further non-limiting aspect, the control unit is configured to generate a driving signal (30) in which said first portion (30) is coded according to a predetermined binary coding and/or in which at least said first portion (30) assumes a substantially square waveform.

According to a further non-limiting aspect, the control unit is configured to control an operational configuration of at least a further control unit of a secondary charging base (200') in use positioned near the charging base (200) and to carry out and/or stop the transmission of the driving signal (30) on said wire (201) in accordance with the operational state of said secondary charging base (200').

According to a further non-limiting aspect, said operational configuration alternatively comprises:

- an operational transmission configuration, in which the control unit of the secondary charging base (200') transmits said driving signal (30) on said wire (201),

- an operational standby configuration, in which the control unit of the secondary charging base (200') does not transmit said driving signal (30) on said wire (201).

According to a further non-limiting aspect, the charging base (200) comprises a wireless communication module (308), configured to establish a logical connection with the control unit of said secondary charging base (200'), and to receive a signal from said secondary charging base (200'), said signal being indicative of said operational configuration.

According to a further non-limiting aspect, said charging base (200) comprises at least one pair of power contacts suited to transfer electrical energy towards a supply battery of said self-propelled vehicle (10).

According to a further non-limiting aspect, the base (200) comprises a connector suited to allow the removable connection of said wire (201).

According to a further non-limiting aspect, said connector comprises at least one terminal electrically connected with the control unit (300).

According to a further non-limiting aspect, the base (200) comprises at least a first pair of conductors (210) configured to transmit an auxiliary signal (40) for controlling the self-propelled vehicle (10) when near the base.

According to a further non-limiting aspect, the base (200) comprises at least a second pair of conductors (220) configured to transmit an auxiliary signal (40) for controlling the self-propelled vehicle (10) when near the base.

According to a further non-limiting aspect, the first pair of conductors (210) has a greater length with respect to the length of the second pair of conductors (220) and/or the first pair of conductors (210) is oriented differently with respect to the second pair of conductors (220) and/or the first pair of conductors (210) is positioned at a different height with respect to the height at which the second pair of conductors (220) lies.

According to a further non-limiting aspect, the charging base comprises a control unit (300) for controlling a self-propelled vehicle (10), in which the control unit (300) is configured to be electrically connected with at least one wire (201) delimiting a ground or floor (100) on which the self-propelled vehicle (10), when in use, carries out maintenance; said control unit (300) comprising:

- at least one output (301) configured to be connected to the wire (201) and on which, when in use, a driving signal (30) is fed for the self-propelled vehicle (10),
- a power stage (302) connected to the output (301) and configured to feed the driving signal (30) on the output (301),
- a resistance measurement stage (303), connected with the output (301), configured to measure an electrical resistance (R) of the wire (201) when connected to the output (301);

in which the control unit (300) comprises an operational measurement configuration in which it is configured to vary, through the power stage (302), the voltage and/or current of the driving signal (30) according to the electrical resistance (R) measured by the resistance measurement stage (303).

According to a further non-limiting aspect, the control unit (300) comprises:

- a resistance measurement stage (303), connected with the output (301), configured to measure an electrical resistance (R) of the wire (201) when connected to the output (301);

and in which the control unit (300) comprises an operational measurement configuration in which it is configured to vary, through the power stage (302), the voltage and/or current of the driving signal (30) according to the electrical resistance (R) measured by the resistance measurement stage (303).

The control unit (300) for controlling a self-propelled vehicle (10), in which the control unit (300) is configured to be electrically connected with at least one wire (201) delimiting a ground or floor (100) on which the self-propelled vehicle (10), when in use, carries out maintenance; said control unit (300) comprising:

- at least one output (301) configured to be connected to the wire (201) and on which, when in use, a driving signal (30) is fed for the self-propelled vehicle (10),
- a power stage (302) connected to the output (301) and configured to feed the driving signal (30) on the output (301),
- a resistance measurement stage (303), connected with the output (301), configured to measure an electrical resistance (R) of the wire (201) when connected to the output (301);

in which

- the resistance measurement stage (303) comprises an output (303u), connected to the power stage (302) and on which, when in use, a control signal ($s_c(t)$) passes, intended to cause a variation of the voltage and/or current of said driving signal (30) according to the electrical resistance (R) of the wire (201) measured by the resistance measurement stage (303),

- the power stage (302) comprises a Buck converter (304) and an H-bridge (305), in which the Buck converter (304) feeds an input of the H-bridge (305) with a control signal, and in which at least one of the Buck converter (304) and the H-bridge (305) receives the control signal ($s_c(t)$) from the output (303u) of the resistance measurement stage (303).

According to a further non-limiting aspect, the H-bridge (305) is connected in series to the Buck converter (304).

According to a further non-limiting aspect, the Buck converter (304) feeds an input of the H-bridge (305) with a control signal, said input of the H-bridge (305) is a power input, and said control signal is a power signal.

According to a further non-limiting aspect, said resistance measurement stage (303) comprises an output (303u), connected to the power stage (302) and on which, when in use, a control signal ($s_c(t)$) passes, intended to cause a variation of the voltage and/or current of said driving signal (30) according to the electrical resistance (R) of the wire (201) measured by the resistance measurement stage (303).

According to a further non-limiting aspect, the power stage 302 acts as a constant current generator.

According to a further non-limiting aspect, the assembly formed by the resistance measurement stage (303) and the power stage (302) is configured to maintain an intensity of electromagnetic field (B) generated by the wire (201) constant as the electrical resistance (R) of the wire (201) varies.

According to a further non-limiting aspect, the control unit (300) is configured to increase the voltage and/or the current of the driving signal (30) with the increase of the resistance (R) measured by the resistance measurement stage (303), optionally to maintain an intensity of the electromagnetic field (B) generated by the wire (201) at least temporarily constant as the electrical resistance (R) of the wire (201) varies.

According to a further non-limiting aspect, the control signal ($s_c(t)$) is intended to cause an increase in the voltage and/or the current of said driving signal (30) as the electrical resistance (R) of the wire (201) increases, optionally to maintain an intensity of electromagnetic field (B) generated by the wire (201), when in use, at least temporarily constant as the electrical resistance (R) of the wire (201) varies.

According to a further non-limiting aspect, the control unit (300) in the operational measurement configuration is configured to vary, through the power stage (302), the voltage and/or current of the driving signal (30) according to the electrical resistance (R) measured by the resistance measurement stage (303), so that a current of predetermined value, in particular of predetermined average value, is maintained on said wire (201) at least temporarily as the measured electrical resistance (R) varies.

According to a further non-limiting aspect, the power stage (302) comprises a Buck converter (304) and an H-bridge (305), in which the Buck converter (304) feeds an input of the H-bridge (305) with a control signal, and in which at least one of the Buck converter (304) and the H-bridge (305) receives the control signal ($s_c(t)$) from the output (303u) of the resistance measurement stage (303).

According to a further non-limiting aspect, the H-bridge (305) is configured at least to cause a temporary polarity inversion of the driving signal (30) in use fed on the wire (201).

According to a further non-limiting aspect, said Buck converter (304) is configured to operate with a feedback control according to said electrical resistance (R) of the wire (201), and the control signal ($s_c(t)$) is a feedback control signal.

According to a further non-limiting aspect, the control signal (($s_c(t)$) has a voltage proportional to the resistance (R) of the wire (201).

According to a further non-limiting aspect, the control signal (($s_c(t)$) has an increasing voltage, when in use as the resistance (R) of the wire (201) increases.

According to a further non-limiting aspect, the control unit (300) comprises a switching stage (306) located downstream of the power stage (302) and directly connected to the output (301); said switching stage (306) causing a switch-over between the operational measurement configuration and the operational power supply configuration.

According to a further non-limiting aspect, the switching stage (306) is configured to operationally disconnect the resistance measurement stage (303) from the wire (201), at least when the control unit (300) is in said operational power supply configuration.

#### Computer program

In accordance with the present disclosure, a computer program is disclosed, stored on a memory medium; the computer program comprises portions of software code which, when run, cause the method to be executed according to one or more of the aspects described herein.

The computer program according to the present invention can advantageously be run by a control unit of a charging base for self-propelled vehicles.

#### Use

In accordance with the present disclosure, the use of the self-propelled vehicle according to one or more of the aspects described herein for maintenance applications of a ground (100), in particular for maintenance applications, optionally cutting and/or watering and/or aspiration and/or phyto-pharmacological treatment and/or blowing, of a lawn is described herein.

In accordance with the present disclosure, the implementation of the method according to one or more of the aspects described herein for maintenance applications of a ground (100), in particular for maintenance applications, optionally cutting and/or watering and/or aspiration and/or phyto-pharmacological treatment and/or blowing, of a lawn is described herein.

## Figures

The invention will now be described in some of its preferred and non-limiting embodiments, with reference to the accompanying figures. A brief description of such figures is provided below.

Figure 1 illustrates a schematic depiction of a charging base for a self-propelled vehicle, in particular for a robot lawnmower, configured to receive a driving signal from a wire connected with the charging base.

Figure 2 illustrates a circuit diagram of a particular embodiment of a control unit of the charging base.

Figure 3 illustrates a schematic depiction of a non-limiting example of a driving signal for the self-propelled vehicle, in which said driving signal comprises a portion having a predetermined identification coding.

Figure 4 illustrates a schematic depiction in which there is a first portion of ground delimited by a first guide wire of a self-propelled vehicle, and said first portion of ground is close to a second portion of ground delimited by a second guide wire of a self-propelled vehicle. Figure 4 also illustrates a first and a second temporally contiguous signal transmitted on a first and a second channel.

Figure 5 illustrates a block diagram of the base principle for controlling the self-propelled vehicle described herein.

Figure 6 illustrates a schematic depiction of a portion of ground or floor, delimited by a guide wire, within which a first and a second self-propelled vehicle are present.

Figure 7 illustrates a schematic depiction of a first and a second portion of ground or floor which are respectively delimited by a first guide wire for a self-propelled vehicle and by a second guide wire for a self-propelled vehicle; such first and second portion of ground are partially overlapping each other.

## Detailed description

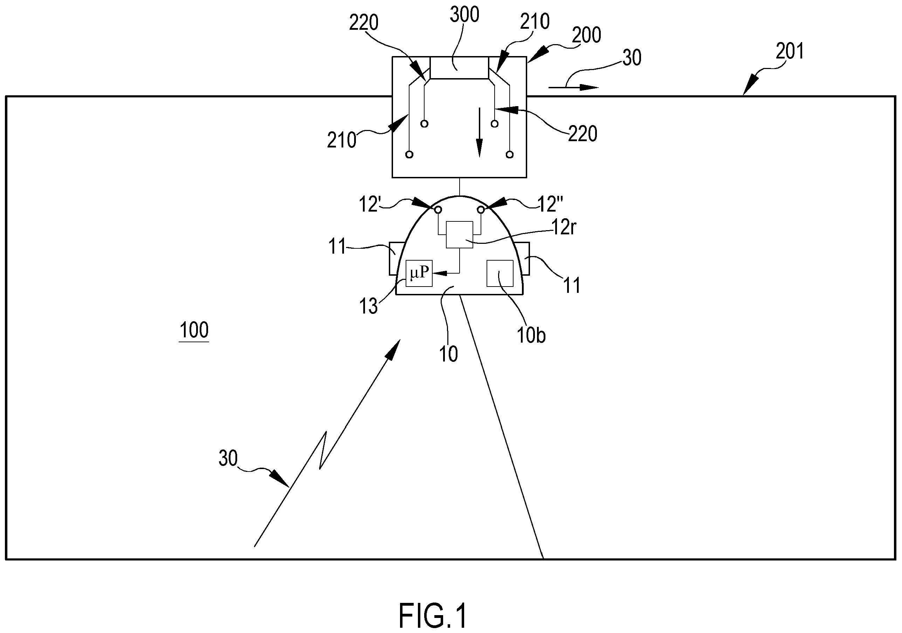

Figure 1 illustrates a schematic view of a control base and a self-propelled vehicle 10, in particular a robot, arranged at a given area of a ground or floor 100. Such area of the ground or floor 100 represents for example a floor or a ground, for example a grassy ground, on which to carry out a maintenance intervention. Such maintenance intervention is carried out by means of the self-propelled vehicle 10.

In detail, the self-propelled vehicle 10 is configured to move autonomously within the area of the ground or floor 100 to carry out the maintenance intervention of the aforesaid ground or floor.

Non-limiting examples of maintenance interventions that can be carried out by the self-propelled vehicle 10 described herein comprise: grass cutting, leaf collection, leaf blowing, fertilizing or distributing pesticides, floor washing, floor drying, floor scrubbing, floor disinfection.

The work area of the self-propelled vehicle is defined by a wire 201, which is arranged by an operator in a given position that defines the perimeter of the area 100. In the embodiment depicted in figure 1, such a wire 201 is arranged to delimit an area of the ground or floor 100 of substantially rectangular shape. Preferably, but not limitedly, the wire 201 is coated with a layer of insulating material, for example silicone or PVC or rubber. Preferably, but not limitedly, such a wire 201 is a stranded wire.

The reference numeral 200 identifies a base 200 for controlling and/or charging a self-propelled vehicle 10. Such a base comprises a control unit 300, the operation of which will be better described below. The control unit 300 is operationally connected, in particular electrically connected, with a plurality of electrical conductors 210, 220 arranged respectively on a left and right side of a contact area and/or overlapping between the self-propelled vehicle 10 and the base 200. On such electrical conductors 210, 220, when in use, such a control unit 300 transmits an auxiliary signal, identified by reference numeral 40, which is used to carry out a fine (precise) positioning of the self-propelled vehicle 10 on the contact area and/or overlapping, so that the self-propelled vehicle 10 can charge its batteries.

The base 200 for controlling and/or charging the self-propelled vehicle 10, through the control unit 300, transmits a driving signal 30 on the wire 201 that is intended to allow controlling the position and movement of the self-propelled vehicle 10.

In the following description portion, the self-propelled vehicle is described in one of its preferred and non-limiting embodiments.

The self-propelled vehicle 10 comprises a plurality of wheels or rollers 11, configured to allow the movement of the self-propelled vehicle 10 on the ground or floor 100. Of such a plurality of wheels or rollers, at least one is a drive wheel or roller.

The self-propelled vehicle 10 comprises at least one electromagnetic signal receiving element 12', 12" configured to receive, in use, a driving signal 30 of the electromagnetic type, transmitted through the wire 201 delimiting the ground or floor 100. Such a receiver element can for example comprise a coil of electrical wire configured to be capable of detecting an electromagnetic field variation at least in terms of intensity. The Applicant observes that in the embodiments depicted in the accompanying figures, the self-propelled vehicle 10 comprises a pair of electromagnetic field receiving elements 12', 12" preferably positioned, but not limitedly, in a symmetrical position with respect to a longitudinal axis of the self-propelled vehicle 10. In a particular and non-limiting embodiment, the electromagnetic field receiving elements 12', 12" are identical.

The at least one electromagnetic signal receiving element 12', 12" is intended to allow a polarity of an electromagnetic field transmitted by the wire 201 to be detected in accordance with a positional relationship assumed with respect to the wire 201, in particular in accordance with at least whether the wire 201 is on a first side (for example the left side) or on a second side (for example the right side) of the self-propelled vehicle 10.

Through such a polarity and through an analysis of the power with which the electromagnetic field transmitted by the wire 201 is received on the electromagnetic signal receiving elements 12', 12", the self-propelled vehicle 10 can understand its position relative to the wire.

The self-propelled vehicle 10 comprises at least one rechargeable battery 10b, and is configured to allow recharging the battery 10b when in correspondence with the base 200. The battery charging takes place by a transfer of electrical energy from the base 200 to the battery 10b.

An electric motor is electrically powered by the battery 10b and is mechanically connected with the wheels or rollers 11. In particular, the electrical power supply of the motor is of the selective type. This means that the electric motor is not always powered by the battery 10b but its power supply is determined by some specific operational conditions in which the self-propelled vehicle 10 is operating. For example, the motor is not powered when the self-propelled vehicle must remain stationary.

A data processing unit 13 is also present on board the self-propelled vehicle 10. Such a data processing unit 13 is electrically connected to the electromagnetic signal receiving element 12', 12", and is configured to use the driving signal 30 to establish a positional relationship between the self-propelled vehicle 10 and the wire 201 and/or an identification of the perimeter of the ground or floor area 100 defined by the wire 201. For example, and not limitedly, the data processing unit 13 is configured to extract from the driving signal 30 a univocal coding, optionally a univocal binary coding from a main portion 30' of driving signal 30 (or first portion) suited to cause an identification of a positional relationship between the self-propelled vehicle 10 and the wire 201 and/or an identification of a perimeter defined by the wire 201.

The data processing unit 13 is further configured to carry out an electronic determination of a distance instantaneously assumed by the self-propelled vehicle 10 with respect to the wire 201 according to said coding, optionally in accordance with said binary coding, and/or in accordance with a power with which the driving signal 30 is received on said at least one electromagnetic signal receiving element 12', 12".

Thus, the data processing unit 13, through the operational connection with the at least one electromagnetic signal receiving element 12', 12", and in particular through an operational connection with the pair of electromagnetic signal receiving elements 12', 12", is configured to electronically process the signal received through such at least one electromagnetic signal receiving element in order to determine a position of the wire 201 in relation to the self-propelled vehicle 10, and in particular if the wire 201 is on the left side or on the right side of the self-propelled vehicle 10.

The data processing unit 13 is also operationally connected with the motor of the self-propelled vehicle 10, so that it is possible to adjust the driving force imparted to the wheels or rollers 11, or so that it is possible to steer them, to make the self-propelled vehicle complete a given path within the perimeter delimited by the wire 201. Therefore, the data processing unit 13 is configured at least to manage an at least partially automatic control of the movimentation of the self-propelled vehicle 10 relative to the wire 201 along said path or perimeter.

The data processing unit 13 is electrically connected to the first and to the second electromagnetic signal receiving element 12', 12". More generally, the data processing unit 13 is operationally connected to the first and to the second electromagnetic signal receiving elements 12', 12".

In a preferred and non-limiting embodiment, the self-propelled vehicle 10 is configured to carry out a filtering of the driving signal 30, so that the subsequent electronic processing carried out by the data processing unit 13 is more effective. The self-propelled vehicle 10 therefore optionally comprises a conditioning circuit, operationally connected to said at least one electromagnetic signal receiving element 12', 12"; said conditioning circuit being configured to carry out a filtering of an undesired electromagnetic noise, and/or to perform an amplification of the driving signal 30 received through the at least one electromagnetic signal receiving element 12', 12". Such a conditioning circuit can be of hardware and/or software type, or be a mixed hardware and software circuit. Such a conditioning circuit can comprise, for example and not limitedly, a bandpass filter.

In an embodiment, the self-propelled vehicle 10 comprises a wireless receiver (not depicted in the accompanying figures) configured to establish a data communication channel with a wireless communication module 308 of the base 200. While this is not to be regarded as limiting, the purpose of the wireless communication module 308 can be, for example, to enable the data communication channel to be established when the self-propelled vehicle 10 is in correspondence with said base 200. In a non-limiting embodiment, such a wireless receiver operates according to Wi-Fi technology, thus according to the IEEE 802.11 protocol, but can also operate for example and not limitedly according to the Bluetooth ® protocol or according to a further standardized or known wireless communication protocol.

At the architectural level, the self-propelled vehicle 10 can therefore comprise: a navigation logic subsystem, comprising at least the data processing unit 13, to define the path that the self-propelled vehicle 10 must travel on the area of the ground or floor 100 delimited by the wire 201 when in use, a power subsystem, which comprises at least the motor and the battery 10b and which further comprises, optionally, impact and/or lifting sensors, and the two electromagnetic signal receiving elements 12', 12".

In particular, the impact sensors are operationally connected with the data processing unit 13 and are configured to cause a stop and/or rotation of the motor in the opposite direction with respect to that previously assumed, if they detect the impact of the self-propelled vehicle 10 with an obstacle. The lifting sensor, also operationally connected to the data processing unit 13, is configured to cause, for example, a stop of the grass cutting blades or more generally, to cause a stop or an impediment to start of the accessory employed by the self-propelled vehicle 10 to carry out maintenance of the ground or floor 100, when the self-propelled vehicle 10 is lifted from the ground or floor 100 by an external force, for example by an operator. Such a sensor therefore acts as a safety sensor. The presence of these elements determines a particular safety of use of the self-propelled vehicle 10.

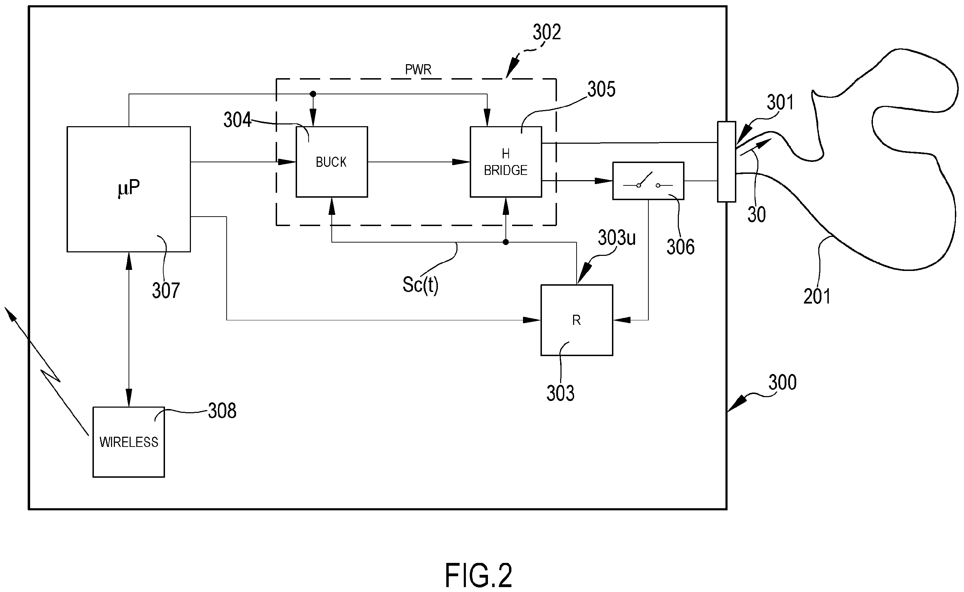

Figure 2 illustrates a detail of a specific embodiment of the circuit contained in the control unit 300 of the charging base 200 for the self-propelled vehicle. From figure 2 it can be seen that the control unit 300 comprises:

- at least one output 301 configured to be connected to the wire 201 and on which, when in use, a driving signal 30 is fed for the self-propelled vehicle 10,

- a power stage 302 connected to the output 301 and configured to feed the driving signal 30 on the output 301.

However, Figure 2 illustrates a particular embodiment of the control unit 300 that further comprises a resistance measurement stage 303, connected with the output 301, configured to measure an electrical resistance R of the wire 201, in particular when the wire 201 is connected to the output 301.

The control unit 300 comprises an operational measurement configuration in which it is configured to vary, through the power stage 302, the voltage and/or current of the driving signal 30 according to the electrical resistance R measured by the resistance measurement stage 303.

In fact, the unintended variation of the resistance R of the wire 201 can cause an alteration of the intensity of the electromagnetic field radiated therefrom in the area of the ground or floor 100, and therefore can cause an alteration, in particular a worsening, of the precision and accuracy with which the self-propelled vehicle 10 is able to determine its position within the aforesaid area. In particular, it is observed that in given environments, in particular when humid, an increase in resistance R of the wire 201 can be a phenomenon that occurs with a certain frequency, due to the oxidation of the wire itself.

Therefore, a compensation of the variation of the resistance R of the wire 201 allows to restore the correct voltage and/or current of the driving signal 30 on the wire 201, and therefore allows to restore the correct level of electromagnetic field intensity within the area of the ground or floor 100. Accordingly, the precision and positioning accuracy of the self-propelled vehicle 10 are maintained.

For this reason, the assembly formed by the resistance measurement stage 303 and the power stage 302 is configured, and specifically designed, to maintain an intensity of the electromagnetic field B generated by the wire 201 constant as the electrical resistance R of the wire 201 varies.

The power module 302 is therefore designed to carry out (preferably, in an automatic manner) an adaptation of a power with which the driving signal 30 is fed on said wire 201.

The power adaptation takes place as a function of at least one external parameter, optionally in which the external parameter is part of the following list: ambient temperature, atmospheric pressure, ambient humidity, time of year, wire length, wire section, self-propelled vehicle model.

To do this, more in particular, the control unit 300 is configured to increase the voltage and/or the current of the driving signal 30 as the resistance R measured by the resistance measurement stage 303 increases, optionally to maintain an intensity of electromagnetic field B generated by the wire 201 constant as the electrical resistance R of the wire 201 varies (in particular as it increases). It is observed that the relationship that binds the intensity of the electromagnetic field B generated by the wire 201 with the resistance R of the wire follows the following law:

$$B \propto \frac{i}{r} \; ; \, B \propto \frac{V}{Rr}$$

where V is the voltage [V], R is the resistance of the wire 201 [Ohm], r [m] is the measurement distance of the field B and [A] is the electrical current.

Therefore, the control signal $s_c(t)$ is intended to cause an increase in the voltage and/or the current of said driving signal 30 as the electrical resistance R of the wire 201 increases, to maintain an intensity of electromagnetic field B generated by the wire 201, when in use, constant as the electrical resistance R of the wire 201 varies. This contributes to ensuring that even with wires 201 that gradually deteriorate due to the environmental conditions in which they are exposed, the performance in terms of precision and positioning accuracy are hardly affected by this measure.

In the operational configuration, the control unit 300 is configured to vary, through the power stage 302, the voltage and/or current of the driving signal 30 according to the electrical resistance R measured by the resistance measurement stage 303, so that a current of predetermined value, in particular of predetermined average value, is maintained on said wire 201 at least temporarily as the measured electrical resistance R varies. In an embodiment, therefore, the power stage 302 acts as a constant current generator.

As can be observed in the diagram of figure 2, the resistance measurement stage 303 comprises an output 303u connected to the power stage 302 and on which, when in use, a control signal $s_c(t)$ passes, intended to cause a variation of the voltage and/or current of said driving signal 30 according to the electrical resistance R of the wire 201 measured by the resistance measurement stage 303. In an embodiment, the control signal $s_c(t)$ is a feedback signal that operates in feedback on the resistance measurement stage. Such a control signal can be an analogue type signal or a numerical type signal. In an embodiment, therefore, the control signal $s_c(t)$ has a voltage proportional to the resistance R of the wire 201.

The power stage 302 has a particular circuit configuration described below. In particular, the power stage 302 comprises a Buck converter 304 and an H-bridge 305. Preferably, said H-bridge 305 is a "full bridge" type bridge. As can be seen noted from the circuit diagram of figure 2, the H-bridge 305 is connected in series to the Buck 304, i.e., it has a power input fed in series from the power output of the Buck converter 304.

The H-bridge 305 is located downstream of the Buck converter 304, and in particular has an input that is directly fed by an output of the Buck converter 304. Thus, the Buck converter 304 powers an input of the H-bridge 305 with a control signal that determines the operation of the H-bridge 305. In use, the H-bridge 305 is activated simultaneously with the Buck converter 304, in particular by a signal from the data processing unit 307, in order to allow the polarity of the driving signal 30 to be adjusted appropriately. In an embodiment, such a control signal is a power signal.

The H-bridge 305 is typically provided with four power transistors, particularly four FET or MOS type transistors, which can be selectively powered independently of each other. Such FET or MOS are power transistors. The selective power supply of one or more of said transistors actually allows to exchange (invert) the polarity of the power signal provided by the output of the Buck converter 304. The data processing unit 307 of the control unit has a control output (in particular of the bus or multiwire type) intended to independently power each of the four transistors.

In an embodiment, the control unit 300 comprises a data processing unit 307 configured to cause a sending of a predetermined sequence, in particular a predetermined binary sequence, intended to cause a control of the H-bridge 305 for a polarity alteration of at least part of the said driving signal 30, thereby causing the output 301 to send a positive or negative half-wave (and thus the polarity instantly assumed by the driving signal 30).

At least one of the Buck converter 304 and the H-bridge 305 receives the control signal $s_c(t)$ from the output 303u of the resistance measurement stage 303. However, in the embodiment illustrated in figure 2, the control signal $s_c(t)$ from the output 303u of the resistance measurement stage 303 is provided in input to both the Buck converter 304 and the H-bridge 305.

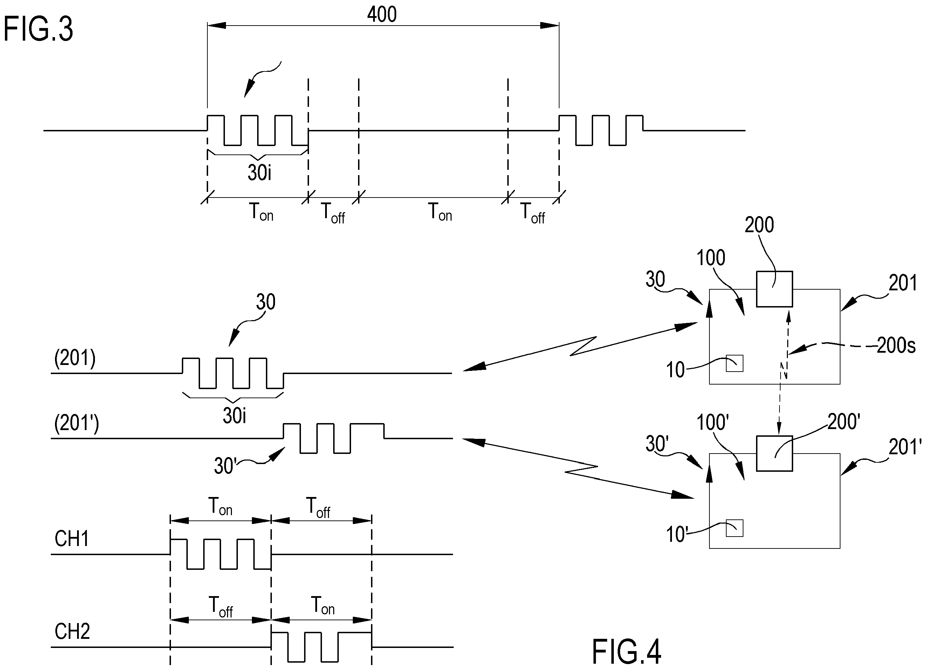

In particular, the purpose of the H-bridge 305 is to allow a temporary polarity inversion of the driving signal 30 that in use is fed on the wire 201. This aspect is important because, as can be observed in figures 3 and 4, the driving signal 30 is a time-varying signal, which has alternating positive and negative polarity, being in particular a square wave signal.

In the circuit configuration depicted in figure 2, the Buck converter 304 is configured to operate with a feedback control according to said electrical resistance R of the wire 201, and the control signal $s_c(t)$ is a feedback control signal.

In an embodiment, the measurement of the resistance R as described above is performed at the start of the self-propelled vehicle 10, or in any case at predetermined time intervals and, preferably not during the normal maintenance activity of the ground or floor 100, in order not to compromise, even for a few moments, the precision and positioning accuracy of the self-propelled vehicle 10.

The resistance measurement stage 303 can be powered off and/or operationally disconnected from the wire 201, when its intervention is not necessary. In an embodiment, the control unit 300 comprises a switching stage 306 located downstream of the power stage 302 and directly connected to the output 301; said switching stage 306 causing a switch-over between the operational measurement configuration and the operational power supply configuration.

The switch 306 is preferably controlled electronically by the data processing unit 307. Preferably, such a switching stage 306 is a solid-state switching stage.

The Applicant observes that in figure 1 the two electromagnetic signal receiving elements 12, 12' are operatively connected, in particular electrically connected, with a receiver stage 12r which is configured to demodulate the electromagnetic signal received by the two electromagnetic signal receiving elements 12, 12'. Although in figure 1 such receiver stage is depicted as a separate block with respect to the data processing unit 13, this is not to be understood in a limiting manner, since it is possible to have a receiver stage 12r integrated within the data processing unit 13. In particular, the receiver stage 12r can be a hardware and/or software type receiver stage.

The data processing unit 13, which is operatively (and preferably electrically) connected to the electromagnetic signal receiving element 12', 12", is configured to electronically process the driving signal 30 received through the at least one electromagnetic signal receiving element 12', 12" so as to determine a positional relationship between the wire 201 and the self-propelled vehicle 10, and is in particular configured to control a cycle 400 of activation and deactivation of said receiver stage 12r. The cycle 400 of activation and deactivation of the receiver stage 12r is schematically depicted in figure 3, with reference to the transmission of a specific type of driving signal.

The charging base 200 thus transmits the driving signal from its control unit configured to be connected with the wire 201 arranged on the ground or floor 100 and intended to delimit a work area of the self-propelled vehicle 10 and is configured to transmit the driving signal 30 in first given time periods and to interrupt the transmission of the driving signal 30 in second given time periods, in which at least a first given time period and in which at least a second given time period determine the cycle 400 of activation and deactivation of the receiver stage 12r of the self-propelled vehicle 10.

Preferably, but not limitedly, where the above-mentioned conditioning circuit is present, said conditioning circuit will be installed in substantial correspondence, preferably within, the receiver stage 12r.

As depicted for example in figure 3, the data processing unit 13 is configured to deactivate at least once, within the cycle 400, said receiver stage 12r for a predetermined time interval Toff of deactivation, in which the driving signal 30 is not received and/or processed electronically, and to activate at least once, within said cycle 400, the receiver stage 12r for a predetermined time interval Ton of activation, so as to allow the reception and/or electronic processing of the driving signal 30; the activation and deactivation mentioned herein take place according to a predetermined activation and/or deactivation criterion.

Conveniently, during the predetermined time interval Toff of deactivation, the driving signal 30 does not carry useful data for controlling the position of the self-propelled vehicle 10, and more preferably, although not limitedly, is substantially null.

As depicted in figure 3, the driving signal 30 comprises at least a first portion having a predetermined identification coding 30i, in particular a predetermined identification coding 30i configured to allow for a univocal identification of a charging base 200 transmitting the driving signal 30 and/or configured to allow a univocal identification of the self-propelled vehicle 10 and/or configured to determine at least one of: the predetermined time interval Toff of deactivation, the predetermined time interval Ton of deactivation, a time length of said cycle 400. In figure 3, the identification coding 30i corresponds to a binary sequence 101010. Alternatively, or in combination with the above, the identification coding 30i can comprise data intended to enable the self-propelled vehicle 10 to identify whether, and if so, that the driving signal 30 is actually intended for it, and not for example for a further self-propelled vehicle 10'.

Although a solution is depicted in figure 3 in which only a first portion of the driving signal with non-zero (square) waves is depicted, in a further embodiment not shown in the accompanying figures, the driving signal 30 can advantageously comprise accessory portions such that it is possible - for the data processing unit 13 - to extract control data in order to allow further electronic information following the reception of the driving signal 30.

Also illustrated in figure 3 is a particular configuration in which for each cycle 400 there is a first time interval Toff of deactivation and a second time interval Toff of deactivation, and in which the first and the second time interval Toff of deactivation are separated from the first time interval Toff of deactivation by a second time interval Ton of activation of the receiver stage 12r. This means that it should not be understood that for each cycle 400 there is a single and unique time interval Ton of activation and a single and unique time interval Toff of deactivation.

In any case, in order to preserve the useful information necessary for the reception of the positioning of the self-propelled vehicle 10 within the ground or floor area 100 delimited by the wire 201, the predetermined time interval Ton of activation is sufficient to cause a reception, in particular a full reception, of at least the first portion of the signal having the predetermined identification coding 30i.

It is further observed that the square waveform depicted in the accompanying figures is not intended to be limiting, since the driving signal 30 could be transmitted using a further type of waveform and according to predefined modulation schemes.

The data processing unit 13 preferably contains a copy of the predetermined identification coding 30i, and in the case of figure 3 such a copy corresponds to a binary sequence 101010. Upon the receipt of said predetermined identification coding 30i, the data processing unit 13 is configured to automatically carry out a comparison between the binary sequence extracted from the predetermined identification coding 30i and that corresponding to the copy of said stored predetermined identification coding.

The aforesaid copy can be attached to, or associated with, a string or datum that can be indicative of: a particular charging base 200, an identity of the self-propelled vehicle 10, or can be indicative of at least one of the predetermined time interval Toff of deactivation, the predetermined time interval Ton of activation, a time length of the said cycle 400.

If an identity is determined from the aforementioned comparison, for example, for the data processing unit 13 it will be possible to trace the charging base 200 that has transmitted the driving signal 30 and/or it will be possible to determine that the predetermined identification coding 30i is specifically intended for the self-propelled vehicle 10 in question.

If an identity is determined from the above comparison, it will also be possible for the data processing unit 13 to move (in particular, to start or stop the movimentation) and/or to control the movimentation of the self-propelled vehicle 10.

In the previous description portion it is reported that the driving signal 30 comprises at least a first portion having a predetermined identification coding 30i configured to determine at least one of: the predetermined time interval Toff of deactivation, the predetermined time interval Ton of activation, a time length of said cycle 400. A particular non-limiting embodiment of the driving signal 30 described here is characterized in that it allows the data processing unit 13 to independently determine the time interval in which the receiver stage 12r must be silenced in accordance, precisely to the particular identification coding 30i. For example, it can be the case that the binary sequence 101010, when coupled with the corresponding binary sequence stored in the data processing unit 13, determines a time interval Toff of deactivation of 35ms in length. By virtue of this aspect it is possible to significantly improve the flexibility of use of the self-propelled vehicle 10.

Thus, the control method of the self-propelled vehicle 10 described herein comprises a step of storing and/or adapting at least one of the time length of the cycle 400, the predetermined time interval Toff of deactivation, the predetermined time interval Ton of activation, according to the first portion and/or according to the predetermined identification coding 30i.

More in particular, the data processing unit 13 automatically carries out a comparison step between the predetermined identification coding 30i, in particular between the binary sequence extracted from the predetermined identification coding 30i, and the predetermined identification coding 30i, in particular the binary sequence, stored and if it determines an identity, electronically set one of the predetermined time interval Toff of deactivation, the predetermined time interval Ton of activation, according to the electronic data attached to, or associated with, the aforesaid copy for which the identity was determined.

In a preferred but non-limiting embodiment, the self-propelled vehicle 10 is configured to allow a selection of a certain receiving channel. Such a selection can be carried out manually - for example and not limited to a switch placed on the self-propelled vehicle, or electronically through the data processing unit 13. In such a case, in particular, the data processing unit 13 can be configured to allow a selection of a certain reception channel among a plurality of reception channels (identified in figure 4 with the references Ch1, Ch2) selectively selectable for the receiver stage. In particular, such receiving channels can be separated from each other in frequency. This means that the selection of a certain receiving channel between the first channel Ch1 and the second channel Ch2 can in this case comprise a tuning of the receiver stage 12r at least between a first frequency or band of frequencies and at least a second frequency or band of frequencies, where preferably said first band of frequencies and said second band of frequencies are separated from each other. Clearly in such a case, the control unit 300 of the charging base 200 must be configured to transmit the driving signal 30 with a frequency band or on a carrier compatible with the frequency band selected on the self-propelled vehicle.

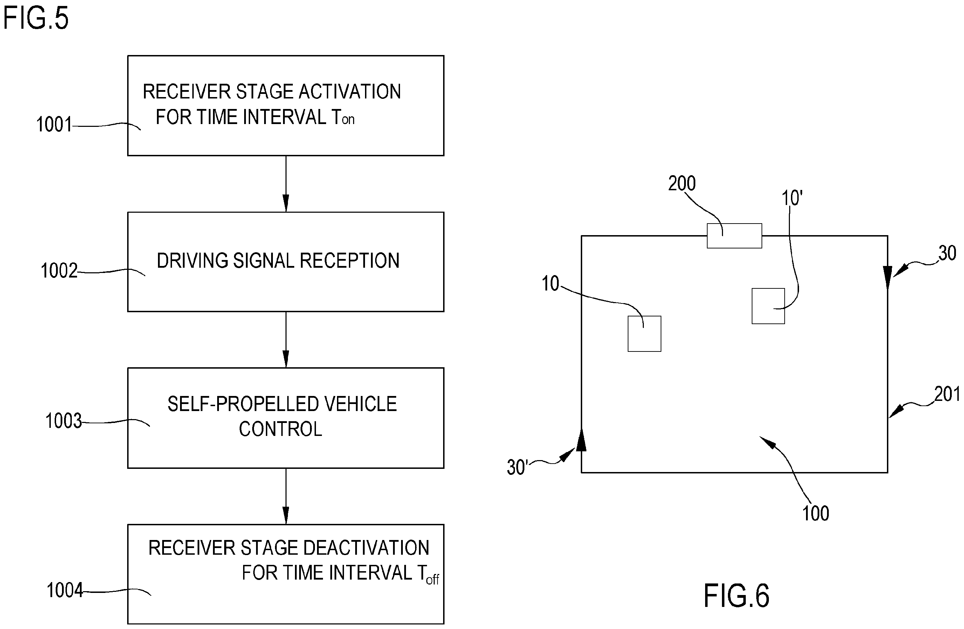

Figure 5 illustrates a block chart of a control method of a self-propelled vehicle 10.

The block diagram comprises a first block 1001 that identifies an activation step of the receiver stage 12r for the predetermined time interval Ton of activation of the receiver stage 12r, a second block 1002 of receiving the driving signal, in which the receiver stage 12r actually receives the driving signal 30 and in particular the identification coding 30i. The block chart illustrates a block 1003 that identifies a driving or controlling step of the self-propelled vehicle 10, by virtue of the driving signal 30. The driving step identified by block 1003 at least for the first time that the driving signal 30 is received, temporarily follows the reception step 1002 of the driving signal 30 and also follows the activation step of the reception step 12r for the time interval Ton of activation. The block chart of figure 5 also identifies a deactivation step of the receiver stage step for the predetermined time interval Toff. Such a step is identified by block 1004.

The present disclosure therefore illustrates a control method of a self-propelled vehicle 10 configured to carry out maintenance on a ground or floor 100. The method mentioned herein first comprises a reception step 1002 a driving signal 30 suited to cause, when received by the self-propelled vehicle 10, an identification of a working perimeter defined by the wire 201 and/or a determination of the position of the self-propelled vehicle 10 in an area of the ground or floor 100 delimited by a wire 201 on which said driving signal 30 is transmitted in use.

The method further comprises a driving step 1003 of the self-propelled vehicle 10. This driving step comprises at least one activation step of at least one motor of the self-propelled vehicle 10 so as to cause a movimentation thereof on said ground or floor 100, and comprises an activation and deactivation cycle of a receiver stage 12r of the self-propelled vehicle 10.

The method further comprises:

- a cyclical deactivation 1004 of the receiver stage 12r for a predetermined time interval Toff of deactivation, in which the driving signal 30 is not received and/or processed electronically,

- a cyclical activation 1001 of the receiver stage 12r for a predetermined time interval Ton of activation, so as to allow the reception and/or electronic processing of the driving signal 30.

The cyclical deactivation and cyclical activation of said receiver stage 12r take place according to a predetermined activation and/or deactivation criterion.

In particular, such an activation and/or deactivation criterion is designed so that there are no overlapping windows for receiving the driving signal 30 with time intervals in which charging bases 200 contiguous to that of the self-propelled vehicle 10 considered herein transmit in turn driving signals 30 for further self-propelled vehicles (in particular, at least for a single further self-propelled vehicle). The reception windows are defined by the time interval Ton of activation in which the receiver stage 12r is activated. This reduces the risk of signal reception collisions and improves the accuracy and reliability of positioning the self-propelled vehicle within the ground or floor area delimited by the wire 201.

In a specific embodiment, said predetermined activation and/or deactivation criterion is such that the predetermined time interval Toff of deactivation corresponds to a time interval in which on a further wire 201' a driving signal 30 is transmitted for a further self-propelled vehicle 10' operating on a further area of said ground or floor 100 delimited by said further wire 201' and/or corresponds to a time interval in which on the wire 201 a driving signal 30' is transmitted for a further self-propelled vehicle 10' operating on the ground or floor 100 delimited by the wire 201.

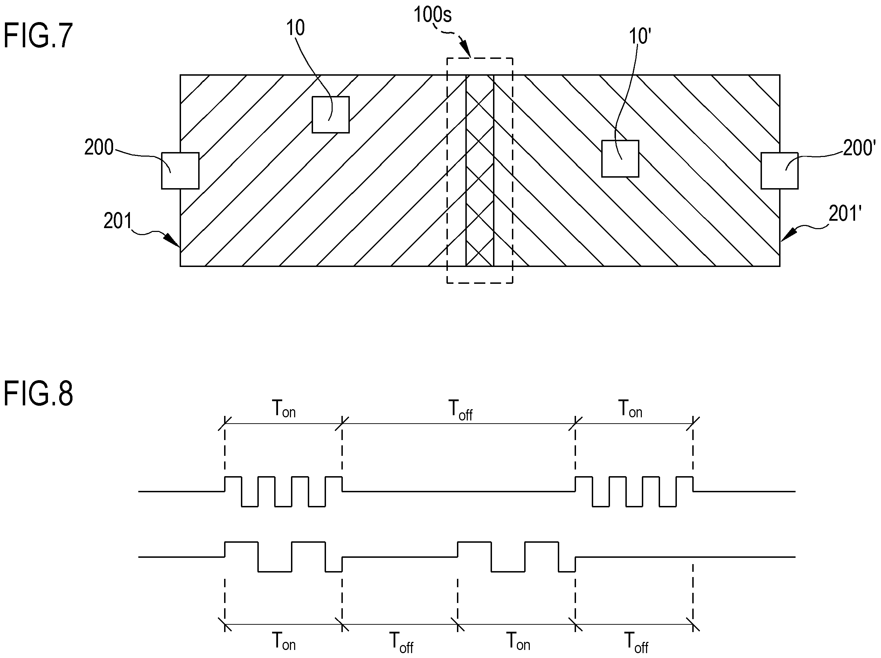

In particular, through the configuration and/or the method described above, it is possible to efficiently control, and without signal reception collisions, multiple self-propelled vehicles 10 within a single area delimited by the wire 201 (this solution is depicted in figure 6), or multiple self-propelled vehicles 10 each in their own area delimited by their own wire (first wire 201, second wire 201', as depicted in figure 7).

The Applicant observes that in the event in which a first and a second self-propelled vehicle 10, 10' are each controlled by their own and respective first and second base 200, 200', the ground or floor areas 100 delimited respectively by the first and the second wire 201, 201' can also be overlapping. This is the case schematically depicted in figure 8.

A particular and non-limiting embodiment of the driving signal 30 is such that the predetermined identification coding 30i contains data related to a position assumed by a further self-propelled vehicle 10' that moves within the area of ground or floor 100 on which the self-propelled vehicle 10 also moves. In this case, the data processing unit 13 of the self-propelled vehicle 10 can be advantageously configured to move and/or control a movimentation of the self-propelled vehicle 10 so as to avoid a collision between the self-propelled vehicle 10 and the further self-propelled vehicle 10'. By virtue of this aspect, it is possible to carry out an anti-collision software control between multiple self-propelled vehicles positioned within an area of ground or floor 100 delimited by a single guide wire. By virtue of this aspect, it is also possible to control the movement of the first and the second self-propelled vehicle 10, 10' so as to determine an alternative (therefore, not simultaneous) approach of the first self-propelled vehicle 10 or the second self-propelled vehicle 10' towards a shared charging base 200.

In light of the above, it is therefore clear that the present disclosure illustrates a control method of a first and a second self-propelled vehicle 10, 10' each configured to carry out maintenance on a ground or floor 100.

Such a method firstly comprises (on the receiver stage of the first self-propelled vehicle) a reception step of a first driving signal 30 suited to cause, when received by the first self-propelled vehicle 10, an identification of a working perimeter defined by a first wire 201 and/or a determination of the position of the first self-propelled vehicle 10 in an area of said ground or floor 100 delimited by the first wire 201 on which the first driving signal 30 is transmitted in use.

The method further comprises (on the receiver stage of the second self-propelled vehicle) a reception step of a second driving signal 30' suited to cause, when received by the second self-propelled vehicle 10', an identification of a working perimeter defined by the first wire 201 and/or by a second wire 201' and/or a determination of the position of the second self-propelled vehicle 10' in an area of said ground or floor 100 delimited by the first wire 201 and/or by the second wire 201' on which said second driving signal 30' is transmitted. In fact, the first and the second self-propelled vehicle 10, 10' could be positioned in a single work area delimited by a single wire 201 on which the first or the second driving signal 30, 30' alternately pass, or in two distinct but contiguous or proximal work areas, each delimited by a respective first wire 201 (first work area) and second wire 201' (second work area).

The method further comprises a driving step of the first and the second self-propelled vehicle 10, 10' comprising at least one activation step of at least one motor of the first and/or second self-propelled vehicles 10, 10' in order to cause a movimentation thereof on the ground or floor 100.

The method in particular comprises:

- an activation and deactivation cycle of the receiver stage 12r of the first self-propelled vehicle 10 in turn comprising:

○ a cyclical deactivation (block 1004) of the receiver stage 12r for a predetermined time interval Toff of deactivation, in which the first driving signal 30 is not received and/or processed electronically,

○ a cyclical activation (block 1001) of the receiver stage 12r for a predetermined time interval Ton of activation, so as to allow the reception and/or electronic processing of the first driving signal 30,

- an activation and deactivation cycle of the receiver stage 12r of the second self-propelled vehicle 10', in turn comprising:

○ a cyclical deactivation (block 1004) of the receiver stage 12r for a predetermined time interval Toff of deactivation, in which the second driving signal 30' is not received and/or processed electronically,

○ a cyclical activation (block 1001) of the receiver stage 12r for a predetermined time interval Ton of activation, so as to allow the reception and/or electronic processing of the second driving signal 30'.

As described above, the cyclical activation of the receiver stage 12r of the first self-propelled vehicle 10 is temporally offset, in particular not overlapping, the cyclical activation of the receiver stage 12r of the second self-propelled vehicle 10'. Thus also the cyclical deactivation of the receiver stage 12r of the first self-propelled vehicle 10 is temporarily offset, in particular not overlapping, the cyclical deactivation of the receiver stage 12r of the second self-propelled vehicle 10'.

Preferably, the cyclical activation of the receiver stage 12r of the first self-propelled vehicle 10 temporally corresponds to the cyclical deactivation of the receiver stage 12r of the second self-propelled vehicle 10' and, likewise, the cyclical activation of the receiver stage 12r of the second self-propelled vehicle 10' temporally corresponds to the cyclical deactivation of the receiver stage 12r of the first self-propelled vehicle 10.

Where the first and the second self-propelled vehicles 10, 10' operate on two areas of ground or floor 100 respectively delimited by a first and a second wire 201, 201', the activation and deactivation inversion between the receiver stages 12r of the first and the second self-propelled vehicle 10, 10' follows a tuning step of the transmissions of the first and the second driving signals 30, 30', in which the first charging base 200, queries and controls the second charging base 200' so as to adjust the transmission of the driving signal of the latter (second driving signal 30') when the first driving signal 30 is not transmitted or is null. For this reason, of the two charging bases, one becomes a main or controlling base, and one becomes a secondary or controlled base. For the purposes of the present disclosure, the second base 200' is described herein as secondary base.

In particular, in fact, the control unit 300 of the charging base 200 can be configured to control an operational configuration of at least a further control unit of a secondary charging base 200' in use positioned near the charging base 200.

The step of controlling the operational configuration of the at least a further control unit of the secondary charging base 200' is carried out by the control unit 300 of the charging base 200 in an almost automated manner, through a specific software routine.

The control unit 300 of the first charging base 200 is configured to carry out and/or stop the transmission of the driving signal 30 on said wire 201 (first wire 201) according to the operating state of the secondary charging base 200'.

The operational configuration of each of the two charging bases 200, 200' comprises:

- an operational transmission configuration, in which the control unit of the secondary charging base 200' transmits the driving signal 30 on the wire 201,

- an operational standby configuration, in which the control unit of the secondary charging base 200' does not transmit the driving signal 30 on said wire 201.

For this reason, in a non-limiting embodiment of the charging base 200, the wireless communication module 308 is configured to establish a logical connection with the control unit of said secondary charging base 200', and to receive a tuning signal 200s from the secondary charging base 200'. The tuning signal 200s is indicative of said operational configuration, and allows to distinguish at least between the operational transmission configuration and the operational standby configuration.

Therefore, the control method of the first and the second self-propelled vehicle 10, 10' disclosed herein comprises a tuning step between the first base 200 for charging and/or controlling self-propelled vehicles and the second base 200' for charging and/or controlling self-propelled vehicles.

The tuning step is configured and specifically intended to cause a temporal separation between the transmission of the first driving signal 30 from the second driving signal 30' and/or is configured and specifically intended to cause a tuning of the activation and deactivation cycle of the receiver stage 12r of the first self-propelled vehicle 10 with the activation and deactivation cycle of a receiver stage 12r of the second self-propelled vehicle 10' such that the cyclical activation of the receiver stage 12r of the first self-propelled vehicle 10 is temporarily offset, in particular not overlapping, the cyclical activation of the receiver stage 12r of the second self-propelled vehicle 10'. The tuning step comprises the reception of said tuning signal 200s.

The Applicant observes that a data processing unit 13 has been referred to in the present disclosure. In an embodiment, such a data processing unit 13 can comprise a general purpose processor on which a specific software program intended to cause the execution of the method steps described herein is executed in use. Alternatively, the data processing unit 13 can comprise an application-specific processor, and/or an FPGA. The memory on which the computer program executed by the data processing unit 13 is implemented can be internal to the data processing unit 13 or external, and can be accessed by the latter through a wired or at least partially wireless connection. The wired connection can be electrical and/or optical.

The advantages of the present invention are evident in the light of the foregoing description. By managing the time intervals (Ton, Toff) of activation and deactivation of the receiver stage 12r according to said predetermined criterion, it is possible to avoid interference where two self-propelled vehicles operate within a single ground or floor area delimited by a single wire and/or where two self-propelled vehicles operate on contiguous ground or floor areas and/or at least partially overlapping and each delimited by its own wire. This allows a better positioning accuracy for each self-propelled vehicle.

Further, by virtue of the self-propelled vehicle and the method described herein, it is possible to provide for the maintenance of areas of complex shape with two bases 200 near each other.

The implementation of the method described herein is easily applicable also on pre-existing systems, since an update of the firmware of the control unit of the base 200 which transmits the driving signal 30 and the firmware of the data processing unit 13 of the self-propelled vehicle 10 is sufficient. In particular, the implementation of the method described herein on self-propelled vehicles 10 and relative bases 200 already provided with data processing units and programmable control units, does not require the hardware adaptation of either the base or the self-propelled vehicle 10. The above-mentioned updating operation can be carried out by a simple connection of the data processing unit 13 of the self-propelled vehicle and/or the control unit 300 with an electronic computer, wired or wirelessly, and the update can be completed in a few minutes.

By virtue of the particular hardware configuration of the charging base 200, the control implemented through the method described herein and/or through the data processing unit 13 of the self-propelled vehicle is particularly energy efficient and is applicable for long operating times of the self-propelled vehicle 10 without the need for calibrations even if the wire 201 were to be damaged and/or oxidized, varying its resistance.

The invention is not limited to the embodiments illustrated in the figures. Therefore, where in the following claims elements or process steps are followed by reference numerals or signs, it is to be understood that such reference numerals or signs are provided for the sole purpose of increasing the intelligibility of the claims and should not be considered as limiting.

It is finally evident that additions, modifications or variations can be applied to the present invention, which are obvious to a person skilled in the art, in the limit of the wording of the appended claims.

## Claims

1.  Self-propelled vehicle (10) configured to carry out maintenance on a ground or floor (100), in particular self-driving robot lawnmower, comprising:

    - a plurality of wheels or rollers (11), configured to allow the movement of the self-propelled vehicle (10) on said ground or floor (100),
    - a motor coupled to at least one wheel or one roller of said plurality of wheels or rollers (11) so as to make said wheel a drive wheel or said roller a driving roller,
    - at least one electromagnetic signal receiving element (12', 12") configured to receive, in use, a driving signal (30) of the electromagnetic type, transmitted through a wire (201) delimiting an area of said ground or floor (100),
    - a receiver stage (12r), operatively connected with said at least one electromagnetic signal receiving element (12', 12"),
    - a data processing unit (13) operationally, optionally electrically, connected to the electromagnetic signal receiving element (12', 12"), and configured to electronically process the driving signal (30) received by means of said at least one electromagnetic signal receiving element (12', 12") in order to determine a positional relationship between said wire (201) and the self-propelled vehicle (10),

    **characterised in that** said data processing unit (13) is configured to control a cycle (400) of activation and deactivation of said receiver stage (12r), the control of said cycle (400) of activation and deactivation presupposing, in accordance with a predetermined activation and/or deactivation criterion, that said receiver stage (12r) is activated at least once, within said cycle (400), for a predetermined time interval (Ton) of activation, and that said receiver stage (12r) is deactivated at least once, within said cycle (400), for a predetermined time interval (Toff) of deactivation, in order to allow the reception and/or the electronic processing of the driving signal (30) in the predetermined time interval (Ton) of activation only.

2.  Self-propelled vehicle (10) according to claim 1, wherein the driving signal (30) comprises at least a first portion having an identification coding (30i), in particular a predetermined identification coding (30i), said identification coding (30i) being configured to allow univocal identification of a charging base (200) transmitting said driving signal (30) and/or being configured to allow univocal identification of said self-propelled vehicle (10) and/or being configured to allow univocal identification of the specific destination of the driving signal (30) to said self-propelled vehicle (10) and/or being configured to determine and/or to modify at least one of: the predetermined time interval (Toff) of deactivation, the predetermined time interval (Ton) of activation, a time length of said cycle (400).

3. Self-propelled vehicle (10) according to claim 2, wherein the predetermined time interval (Ton) of activation is sufficient to cause a reception, in particular a full reception, of at least said first portion having said identification coding (30i).

4. Self-propelled vehicle (10) according to one or more of the preceding claims, comprising a first electromagnetic signal receiving element (12') and a second electromagnetic signal receiving element (12"), and wherein the data processing unit (13) is electrically connected to the first electromagnetic signal receiving element (12') and to the second electromagnetic signal receiving element (12', 12"), wherein the receiver stage (12r) is operatively connected with the first electromagnetic signal receiving element (12') and with the second electromagnetic signal receiving element (12") and wherein the data processing unit (13) is configured to determine the position of the self-propelled vehicle (10) with respect to said wire (201) according to a power and/or a polarity assumed at least temporarily by the driving signal (30), the first electromagnetic signal receiving element (12') and the second electromagnetic signal receiving element (12") being configured and specifically intended to allow the data processing unit (13) to determine said power and/or said polarity at least temporarily assumed by the driving signal (30).

5. Self-propelled vehicle (10) according to one or more of the preceding claims, wherein the data processing unit (13) is configured to store a copy of the identification coding (30i) and to electronically, optionally automatically, compare the identification coding (30i) received through the driving signal (30) with a copy of a predetermined identification coding (30i), in order to set at least one of the predetermined time interval (Toff) of deactivation, the predetermined time interval (Ton) of activation and the time length of said cycle (400), according to an electronic datum attached to, or associated with, the copy for which the existence of a condition of identity has been determined between the predetermined identification coding (30i) and the copy of the predetermined identification coding (30i).

6. Self-propelled vehicle (10) according to one or more of the preceding claims, wherein the identification coding (30i) contains data relating to a position assumed by a further self-propelled vehicle (10') and the data processing unit (13) is configured to move and/or to control a movement of the self-propelled vehicle (10') in order to avoid a collision between the self-propelled vehicle (10) and the further self-propelled vehicle (10') and/or in order to optimize the movements of the self-propelled vehicle (10) in relation to the movements of the further self-propelled vehicle (10'), wherein such optimization is measured in particular as an increase in an efficiency of said self-propelled vehicle (10) and of said further self-propelled vehicle (10') in relation to a respective maintenance activity of said ground or floor (100) or as an increment of the ground or floor (100) processed by said self-propelled vehicle (10) and by said further self-propelled vehicle (10') in a time unit.

7. Control method of a self-propelled vehicle (10) configured to carry out maintenance on a ground or floor (100), in particular control method of a self-driving robot lawnmower, the method comprising:

- a reception step (1002) of a driving signal (30) transmitted through a wire (201) delimiting an area of said ground or floor (100) and apt to cause, when received by the self-propelled vehicle (10), an identification of a working perimeter defined by the wire (201) and/or a determination of the position of the self-propelled vehicle (10) in the area of said ground or floor (100) delimited by the wire (201);
- a driving step (1003) of the self-propelled vehicle (10) comprising at least one activation step of at least one motor of the self-propelled vehicle (10) so as to cause a movement of the self-propelled vehicle (10) on said ground or floor (100), **characterised in that** the method includes an activation and deactivation cycle of a receiver stage (12r) of the self-propelled vehicle (10), the activation and deactivation cycle of the receiver stage (12r) comprising:

- a cyclic activation (1001) of said receiver stage (12r) for a predetermined time interval (Ton) of activation and
- a cyclic deactivation (1004) of said receiver stage (12r) for a predetermined time interval (Toff) of deactivation,

wherein the electronic reception and/or processing of the driving signal (30) are allowed only in the predetermined time interval (Ton) of activation, and

wherein the cyclical activation and the cyclical deactivation of said receiver stage (12r) take place according to a predetermined activation and/or deactivation criterion.

8. Method according to claim 7, comprising a generation step of at least a first portion of said driving signal (30) having an identification coding (30i), in particular a predetermined identification coding (30i), said identification coding (30i) being configured to allow univocal identification of a charging base (200) transmitting said driving signal (30) and/or being configured to allow univocal identification of said self-propelled vehicle (10) and/or being configured to allow univocal identification of the specific destination of the driving signal (30) to said self-propelled vehicle (10) and/or being configured to determine and/or to modify at least one of: the predetermined time interval (Toff) of deactivation, the predetermined time interval (Ton) of activation, a time length of said cycle (400).

9. Method according to claim 8, wherein the cyclic activation (1001) of the receiver stage (12r) takes place for a predetermined time interval (Ton) of activation sufficient to cause a reception, in particular a full reception, of said first portion having said identification coding (30i).

10. Method according to one or more of the claims from 7 to 9, the method comprising, following the reception step of the driving signal (30), an electronic, optionally automatic, comparison between the predetermined identification coding (30i), and a copy of a predetermined identification coding (30i), stored in a memory operatively accessible to the data processing unit (13),

wherein, if said electronic comparison determines an identity, the method comprises a set-up step of at least one between the predetermined time interval (Toff) of deactivation, the predetermined time interval (Ton) of activation and the time length of said cycle (400), according to an electronic datum attached to, or associated with, the copy for which the existence of a condition of identity has been determined between the predetermined identification coding (30i) and the copy of the predetermined identification coding (30i) and/or

wherein the identification coding (30i) contains data relating to a position assumed by a further self-propelled vehicle (10') and the method comprises a moving and/or a controlling of the movement of the self-propelled vehicle (10) so that a collision between the self-propelled vehicle (10) and the further self-propelled vehicle (10') is avoided and/or so that the movements of the self-propelled vehicle (10) are optimized in relation to the movements of the further self-propelled vehicle (10'), wherein this optimization is in particular measured as an increase in an efficiency of said self-propelled vehicle (10) and of said further self-propelled vehicle (10') in relation to a respective maintenance activity of said ground or floor (100) or as an increment of the ground or floor (100) processed by said self-propelled vehicle (10) and by said further self-propelled vehicle (10') in a time unit and/or wherein said method further comprises a reception step of the driving signal (30) on a first electromagnetic signal receiving element (12') and on a second electromagnetic signal receiving element (12") of the self-propelled vehicle (10), said first electromagnetic signal receiving element (12') and said second electromagnetic signal receiving element (12") being operatively connected with the receiver stage (12r) and a step of electronic determination of a position of the self-propelled vehicle (10) with respect to the wire (201) according to a power and/or a polarity assumed at least temporarily by the driving signal (30), the power and/or the polarity at least temporarily assumed by the driving signal (30) being determined through the first electromagnetic signal receiving element (12') and the second electromagnetic signal receiving element (12").

11. Maintenance system for a ground or floor (100), said system comprising at least a first self-propelled vehicle (10) and a second self-propelled vehicle (10'), both the first self-propelled vehicle (10) and the second self-propelled vehicle (10') being in particular self-driving robot lawnmowers, wherein each of the first self-propelled vehicle (10) and the second self-propelled vehicle (10') comprises:

- a plurality of wheels or rollers (11), configured to allow the movement on said ground or floor (100),
- a motor coupled to at least one wheel or one roller of said plurality of wheels or rollers (11) so as to make said wheel a drive wheel or said roller a driving roller,
- at least one electromagnetic signal receiving element (12', 12") configured to receive, in use, an electromagnetic driving signal, the driving signal of said first self-propelled vehicle (10) being a first driving signal (30) transmitted through a first wire (201) delimiting an area of said ground or floor (100), the driving signal of said second self-propelled vehicle (10') being a second driving signal (30') transmitted through said first wire (201) delimiting said area of said ground or floor (100) or through a second wire (201') delimiting a further area of said ground or floor (100),
- a receiver stage (12r), operatively connected with said at least one electromagnetic signal receiving element (12', 12"),
- a data processing unit (13) operatively, optionally electrically, connected to the electromagnetic signal receiving element (12', 12"), the data processing unit (13) of said first self-propelled vehicle (10) being configured to electronically process the first driving signal (30) in order to determine a positional relationship between said first wire (201) and the first self-propelled vehicle (10), the data processing unit (13) of said second self-propelled vehicle (10') being configured to electronically process the second driving signal (30') so as to determine a positional relationship between said first wire (201) and the second self-propelled vehicle (10') or between said second wire (201') and the second self-propelled vehicle (10'),
**characterised in that** said data processing unit (13) of said first self-propelled vehicle (10) is configured to control a cycle (400) of activation and deactivation of said receiver stage (12r) of said first self-propelled vehicle (10), the control of said cycle (400) of activation and deactivation presupposing, in accordance with a predetermined first activation and/or deactivation criterion, that said receiver stage (12r) of said first self-propelled vehicle (10) is activated at least once, within said cycle (400), for a predetermined first time interval (Ton) of activation and that said receiver stage (12r) of said first self-propelled vehicle (10) is deactivated at least once, within said cycle (400), for a predetermined first time interval (Toff) of deactivation, in order to allow the reception and/or electronic processing of the first driving signal (30) only in the predetermined first time interval (Ton) of activation,
wherein said data processing unit (13) of said second self-propelled vehicle (10') is configured to control a cycle (400) of activation and deactivation of said receiver stage (12r) of said second self-propelled vehicle (10'), the control of said cycle (400) of activation and deactivation presupposing, in accordance with a predetermined second activation and/or deactivation criterion, that said receiver stage (12r) of said second self-propelled vehicle (10') is activated at least once, within said cycle (400), for a predetermined second time interval (Ton) of activation and that said receiver stage (12r) of said second self-propelled vehicle (10') is deactivated at least once, within said cycle (400), for a predetermined second time interval (Toff) of deactivation, in order to allow the reception and/or electronic processing of the second driving signal (30') only in the predetermined second time interval (Ton) of activation.

**12.** Control method of a first self-propelled vehicle (10) and of a second self-propelled vehicle (10') each configured to carry out maintenance on a ground or floor (100), the first self-propelled vehicle (10) and the second self-propelled vehicle (10') being in particular self-driving robot lawnmowers, the method comprising:

- a reception step (1002) of a first driving signal (30) transmitted through a first wire (201) delimiting an area of said ground or floor (100) and apt to cause, when received by the first self-propelled vehicle (10), an identification of a working perimeter defined by the first wire (201) and/or a determination of the position of the first self-propelled vehicle (10) in the area of said ground or floor (100) delimited by the first wire (201);
- a reception step (1002) of a second driving signal (30') transmitted through said first wire (201) delimiting said area of said ground or floor (100) or through a second wire (201') delimiting a further area of said ground or floor (100) and apt to cause, when received by the second self-propelled vehicle (10'), an identification of a working perimeter defined by the first wire (201) and/or by the second wire (201') and/or a determination of the position of the second self-propelled vehicle (10') in the area of said ground or floor (100) delimited by the first wire (201) and/or in the further area of said ground or floor (100) delimited by the second wire (201');
- a driving step (1003) of the first self-propelled vehicle (10) and of the second self-propelled vehicle (10') comprising at least one activation step of at least one motor of the first self-propelled vehicle (10) and of at least one motor of the second self-propelled vehicle (10') in order to cause a movimentation on said ground or floor (100), **characterised in that** the method includes:

- a cycle of activation and deactivation of a receiver stage (12r) of the first self-propelled vehicle (10), the cycle of activation and deactivation of the receiver stage (12r) of the first self-propelled vehicle (10) comprising:

▪ a cyclical activation (1001) of said receiver stage (12r) of the first self-propelled vehicle (10) for a predetermined first time interval (Ton) of activation and
▪ a cyclical deactivation (1004) of said receiver stage (12r) of the first self-propelled vehicle (10) for a predetermined first time interval (Toff) of deactivation and

    - a cycle of activation and deactivation of a receiver stage (12r) of the second self-propelled vehicle (10'), the cycle of activation and deactivation of the receiver stage (12r) of the second self-propelled vehicle (10') comprising:

       ▪ a cyclical activation (1001) of said receiver stage (12r) of the second self-propelled vehicle (10') for a predetermined second time interval (Ton) of activation and
       ▪ a cyclical deactivation (1004) of said receiver stage (12r) of the second self-propelled vehicle (10') for a predetermined second time interval (Toff) of deactivation,

    wherein the reception and/or electronic processing of the first driving signal (30) and of the second driving signal (30') are allowed, respectively, in the predetermined first time interval (Ton) of activation only and in the predetermined second time interval (Ton) of activation only, and wherein the cyclical activation and the cyclical deactivation of said receiver stage (12r) of the first self-propelled vehicle (10) and the cyclical activation and the cyclical deactivation of said receiver stage (12r) of the second self-propelled vehicle (10') take place, respectively, according to a predetermined first activation and/or deactivation criterion and according to a predetermined second activation and/or deactivation criterion.

13. Control method according to the preceding claim, wherein said first driving signal (30) and said second driving signal (30') are generated by a control unit of a charging base (200) shared for said first self-propelled vehicle (10) and said second self-propelled vehicle (10'), said control unit of said charging base (200) being operatively connected to said first wire (201) and possibly to said second wire (201').

14. Control method according to claim 12 or claim 13, wherein the cyclic activation of the receiver stage (12r) of the first self-propelled vehicle (10) is temporally offset, in particular not overlapping, with respect to the cyclic activation of the receiver stage (12r) of the second self-propelled vehicle (10').

15. Control method according to any one of the claims from 12 to 14, wherein said first time interval (Ton) of activation has a duration substantially equal to said second time interval (Ton) of activation and

said second time interval (Ton) of activation and wherein said first time interval (Toff) of deactivation has a duration substantially equal to said second time interval (Toff) of deactivation.

**Patentansprüche**

1. Selbstfahrendes Fahrzeug (10), das konfiguriert ist, um Instandhaltung an einem Erdboden oder Fußboden (100) durchzuführen, insbesondere selbstfahrender Rasenmäherroboter, umfassend:

    - eine Vielzahl von Rädern oder Rollen (11), die konfiguriert sind, um die Bewegung des selbstfahrenden Fahrzeugs (10) auf dem Erdboden oder Fußboden (100) zu ermöglichen,
    - einen Motor, der mit mindestens einem Rad oder einer Rolle der Vielzahl von Rädern oder Rollen (11) gekoppelt ist, um das Rad zu einem Antriebsrad oder die Rolle zu einer Antriebsrolle zu machen,
    - mindestens ein elektromagnetisches Signalempfangselement (12', 12"), das konfiguriert ist, um im Gebrauch ein Fahrsignal (30) vom elektromagnetischen Typ zu empfangen, das durch ein Kabel (201) übertragen wird, das einen Bereich des Erdbodens oder Fußbodens (100) begrenzt,
    - eine Empfängerstufe (12r), die funktionsfähig mit dem mindestens einen elektromagnetischen Signalempfangselement (12', 12") verbunden ist,
    - eine Datenverarbeitungseinheit (13), die funktionsfähig, optional elektrisch, mit dem elektromagnetischen Signalempfangselement (12', 12") verbunden ist und konfiguriert ist, um das mittels des mindestens einen elektromagnetischen Signalempfangselements (12', 12") empfangene Fahrsignal (30) elektronisch zu verarbeiten, um eine Positionsbeziehung zwischen dem Kabel (201) und dem selbstfahrenden Fahrzeug (10) zu bestimmen,

    **dadurch gekennzeichnet, dass** die Datenverarbeitungseinheit (13) konfiguriert ist, um einen Zyklus (400) einer Aktivierung und Deaktivierung der Empfängerstufe (12r) zu steuern, wobei die Steuerung des Zyklus (400) einer Aktivierung und Deaktivierung gemäß einem vorbestimmten Aktivierungs- und/oder Deaktivierungskriterium voraussetzt, dass die Empfängerstufe (12r) mindestens einmal innerhalb des Zyklus (400) über ein vorbestimmtes Zeitintervall (Ton) einer Aktivierung aktiviert wird, und dass die Empfängerstufe (12r) mindestens einmal innerhalb des Zyklus (400) über ein vorbestimmtes Zeitintervall (Toff) einer Deaktivierung deaktiviert wird, um den Empfang und/oder das elektronische Verarbeiten des Fahrsignals (30) nur in dem vorbestimmten Zeitintervall (Ton) einer Aktivierung zu ermöglichen.

2. Selbstfahrendes Fahrzeug (10) nach Anspruch 1, wobei das Fahrsignal (30) mindestens einen ersten Abschnitt umfasst, der eine Identifizierungscodierung (30i), insbesondere eine vorbestimmte Identifizierungscodierung (30i), aufweist, wobei die Identifizierungscodierung (30i) konfiguriert ist, um eine eindeutige Identifizierung einer Ladebasis (200) zu ermöglichen, die das Fahrsignal (30) überträgt, und/oder konfiguriert ist, um eine eindeutige Identifizierung des selbstfahrenden Fahrzeugs (10) zu ermöglichen, und/oder konfiguriert ist, um eine eindeutige Identifizierung des spezifischen Ziels des Fahrsignals (30) für das selbstfahrende Fahrzeug (10) zu ermöglichen, und/oder konfiguriert ist, um mindestens eines von Folgendem zu bestimmen und/oder zu modifizieren: das vorbestimmte Zeitintervall (Toff) einer Deaktivierung, das vorbestimmte Zeitintervall (Ton) einer Aktivierung, eine Zeitlänge des Zyklus (400).

3. Selbstfahrendes Fahrzeug (10) nach Anspruch 2, wobei das vorbestimmte Zeitintervall (Ton) einer Aktivierung ausreichend ist, um einen Empfang, insbesondere einen vollständigen Empfang, mindestens des ersten Abschnitts zu bewirken, der die Identifizierungscodierung (30i) aufweist.

4. Selbstfahrendes Fahrzeug (10) nach einem oder mehreren der vorherigen Ansprüche, umfassend ein erstes elektromagnetisches Signalempfangselement (12') und ein zweites elektromagnetisches Signalempfangselement (12"), und wobei die Datenverarbeitungseinheit (13) elektrisch mit dem ersten elektromagnetischen Signalempfangselement (12') und dem zweiten elektromagnetischen Signalempfangselement (12 ', 12") verbunden ist, wobei die Empfängerstufe (12r) funktionsfähig mit dem ersten elektromagnetischen Signalempfangselement (12') und mit dem zweiten elektromagnetischen Signalempfangselement (12") verbunden ist und wobei die Datenverarbeitungseinheit (13) konfiguriert ist, um die Position des selbstfahrenden Fahrzeugs (10) in Bezug auf das Kabel (201) gemäß einer Leistung und/oder einer Polarität zu bestimmen, die zumindest vorübergehend durch das Fahrsignal (30) angenommen wird, wobei das erste elektromagnetische Signalempfangselement (12') und das zweite elektromagnetische Signalempfangselement (12") konfiguriert sind und insbesondere dazu bestimmt sind, der Datenverarbeitungseinheit (13) zu ermöglichen, die Leistung und/oder die Polarität zu bestimmen, die zumindest vorübergehend durch das Fahrsignal (30) angenommen wird.

5. Selbstfahrendes Fahrzeug (10) nach einem oder mehreren der vorherigen Ansprüche, wobei die Datenverarbeitungseinheit (13) konfiguriert ist, um eine Kopie der Identifizierungscodierung (30i) zu speichern und die durch das Fahrsignal (30) empfangene Identifizierungscodierung (30i) elektronisch, optional automatisch, mit einer Kopie einer vorbestimmten Identifizierungscodierung (30i) zu vergleichen, um mindestens eines von dem vorbestimmten Zeitintervall (Toff) einer Deaktivierung, dem vorbestimmten Zeitintervall (Ton) einer Aktivierung und der Zeitlänge des Zyklus (400) gemäß einem elektronischen Datenelement einzustellen, das an der Kopie angebracht ist oder damit assoziiert ist, für die das Vorhandensein einer Identitätsbedingung zwischen der vorbestimmten Identifizierungscodierung (30i) und der Kopie der vorbestimmten Identifizierungscodierung (30i) bestimmt wurde.

6. Selbstfahrendes Fahrzeug (10) nach einem oder mehreren der vorherigen Ansprüche, wobei die Identifizierungscodierung (30i) Daten enthält, die sich auf eine von einem weiteren selbstfahrenden Fahrzeug (10') eingenommene Position beziehen, und die Datenverarbeitungseinheit (13) konfiguriert ist, um eine Bewegung des selbstfahrenden Fahrzeugs (10') zu bewegen und/oder zu steuern, um eine Kollision zwischen dem selbstfahrenden Fahrzeug (10) und dem weiteren selbstfahrenden Fahrzeug (10') zu vermeiden und/oder um die Bewegungen des selbstfahrenden Fahrzeugs (10) in Bezug auf die Bewegungen des weiteren selbstfahrenden Fahrzeugs (10') zu optimieren, wobei eine solche Optimierung insbesondere als eine Steigerung eines Wirkungsgrads des selbstfahrenden Fahrzeugs (10) und des weiteren selbstfahrenden Fahrzeugs (10') in Bezug auf eine jeweilige Instandhaltungsaktivität des Erdbodens oder Fußbodens (100) oder als ein Inkrement des Erdbodens oder Fußbodens (100), das von dem selbstfahrenden Fahrzeug (10) und von dem weiteren selbstfahrenden Fahrzeug (10') in einer Zeiteinheit verarbeitet wird, gemessen wird.

7. Steuerungsverfahren eines selbstfahrenden Fahrzeugs (10), das konfiguriert ist, um Instandhaltung an einem Erdboden oder Fußboden (100) durchzuführen, insbesondere Steuerungsverfahren eines selbstfahrenden Rasenmäherroboters, das Verfahren umfassend:

- einen Empfangsschritt (1002) eines Fahrsignals (30), das durch ein Kabel (201) übertragen wird, das einen Bereich des Erdbodens oder Fußbodens (100) begrenzt und geeignet ist, um, wenn es durch das selbstfahrende Fahrzeug (10) empfangen wird, eine Identifizierung eines durch das Kabel (201) definierten Arbeitsumfangs und/oder eine Bestimmung der Position des selbstfahrenden Fahrzeugs (10) in dem Bereich des Erdbodens oder Fußbodens (100), der durch das Kabel (201) begrenzt ist, zu bewirken;

- einen Fahrschritt (1003) des selbstfahrenden Fahrzeugs (10), umfassend mindestens einen Aktivierungsschritt mindestens eines Motors des selbstfahrenden Fahrzeugs (10), um eine Bewegung des selbstfahrenden Fahrzeugs (10) auf dem Erdboden oder Fußboden (100) zu bewirken,

**dadurch gekennzeichnet, dass** das Verfahren einen Aktivierungs- und Deaktivierungszyklus einer Empfängerstufe (12r) des selbstfahrenden Fahrzeugs (10) beinhaltet, der Aktivierungs- und Deaktivierungszyklus der Empfängerstufe (12r) Folgendes umfassend:

- eine zyklische Aktivierung (1001) der Empfängerstufe (12r) über ein vorbestimmtes Zeitintervall (Ton) einer Aktivierung und
- eine zyklische Deaktivierung (1004) der Empfängerstufe (12r) über ein vorbestimmtes Zeitintervall (Toff) einer Deaktivierung,

wobei der elektronische Empfang und/oder Verarbeiten des Fahrsignals (30) nur in dem vorbestimmten Zeitintervall (Ton) einer Aktivierung zulässig sind, und
wobei die zyklische Aktivierung und die zyklische Deaktivierung der Empfängerstufe (12r) gemäß einem vorbestimmten Aktivierungs- und/oder Deaktivierungskriterium erfolgt.

8. Verfahren nach Anspruch 7, umfassend einen Erzeugungsschritt von mindestens einem ersten Abschnitt des Fahrsignals (30), der eine Identifizierungscodierung (30i), insbesondere eine vorbestimmte Identifizierungscodierung (30i), aufweist, wobei die Identifizierungscodierung (30i) konfiguriert ist, um eine eindeutige Identifizierung einer Ladebasis (200) zu ermöglichen, die das Fahrsignal (30) überträgt, und/oder konfiguriert ist, um eine eindeutige Identifizierung des selbstfahrenden Fahrzeugs (10) zu ermöglichen, und/oder konfiguriert ist, um eine eindeutige Identifizierung des spezifischen Ziels des Fahrsignals (30) für das selbstfahrende Fahrzeug (10) zu ermöglichen, und/oder konfiguriert ist, um mindestens eines von Folgendem zu bestimmen und/oder zu modifizieren: das vorbestimmte Zeitintervall (Toff) einer Deaktivierung, das vorbestimmte Zeitintervall (Ton) einer Aktivierung, eine Zeitlänge des Zyklus (400).

9. Verfahren nach Anspruch 8, wobei die zyklische Aktivierung (1001) der Empfängerstufe (12r) über ein vorbestimmtes Zeitintervall (Ton) einer Aktivierung erfolgt, das ausreichend ist, um einen Empfang, insbesondere einen vollständigen Empfang, des ersten Abschnitts zu bewirken, der die Identifizierungscodierung (30i) aufweist.

10. Verfahren nach einem oder mehreren der Ansprüche 7 bis 9, das Verfahren umfassend, nach dem Empfangsschritt des Fahrsignals (30), einen elektronischen, optional automatischen, Vergleich zwischen der vorbestimmten Identifizierungscodierung (30i) und einer Kopie einer vorbestimmten Identifizierungscodierung (30i), die in einem Speicher gespeichert ist, der für die Datenverarbeitungseinheit (13) funktionsfähig zugreifbar ist,

wobei, wenn der elektronische Vergleich eine Identität bestimmt, das Verfahren einen Einrichtungsschritt von mindestens einem von dem vorbestimmten Zeitintervall (Toff) einer Deaktivierung, dem vorbestimmten Zeitintervall (Ton) einer Aktivierung und der Zeitdauer des Zyklus (400) gemäß einem elektronischen Datum umfasst, das an der Kopie angebracht ist oder damit assoziiert ist, für die das Vorhandensein einer Identitätsbedingung zwischen der vorbestimmten Identifizierungscodierung (30i) und der Kopie der vorbestimmten Identifizierungscodierung (30i) bestimmt wurde, und/oder wobei die Identifizierungscodierung (30i) Daten in Bezug auf eine Position enthält, die von einem weiteren selbstfahrenden Fahrzeug (10') eingenommen wird und das Verfahren ein Bewegen und/oder ein Steuern der Bewegung des selbstfahrenden Fahrzeugs (10) umfasst, sodass eine Kollision zwischen dem selbstfahrenden Fahrzeug (10) und dem weiteren selbstfahrenden Fahrzeug (10') vermieden wird und/oder sodass die Bewegungen des selbstfahrenden Fahrzeugs (10) in Bezug auf die Bewegungen des weiteren selbstfahrenden Fahrzeugs (10') optimiert werden, wobei diese Optimierung insbesondere als Steigerung einer Effizienz des selbstfahrenden Fahrzeugs (10) und des weiteren selbstfahrenden Fahrzeugs (10') in Bezug auf eine jeweilige Instandhaltungsaktivität des Erdbodens oder Fußbodens (100) oder als ein Inkrement des Erdbodens oder Fußbodens (100), das von dem selbstfahrenden Fahrzeug (10) und von dem weiteren selbstfahrenden Fahrzeug (10') in einer Zeiteinheit verarbeitet wird, gemessen wird, und/oder wobei das Verfahren ferner einen Empfangsschritt des Fahrsignals (30) an einem ersten elektromagnetischen Signalempfangselement (12') und an einem zweiten elektromagnetischen Signalempfangselement (12") des selbstangetriebenen Fahrzeugs (10), wobei das erste elektromagnetische Signalempfangselement (12') und das zweite elektromagnetische Signalempfangselement (12") funktionsfähig mit der Empfängerstufe (12r) verbunden sind, und einen Schritt des elektronischen Bestimmens einer Position des selbstangetriebenen Fahrzeugs (10) in Bezug auf das Kabel (201) gemäß einer Leistung und/oder einer Polarität, die zumindest vorübergehend durch das Fahrsignal (30) angenommen wird, umfasst, wobei die Leistung und/oder die Polarität, die zumindest vorübergehend durch das Fahrsignal (30) angenommen wird, durch das erste elektromagnetische Signalempfangselement (12') und das zweite elektromagnetische Signalempfangselement (12") bestimmt wird.

11. Instandhaltungssystem für ein Erdboden oder Fußboden (100), das System umfassend mindestens ein erstes selbstfahrendes Fahrzeug (10) und ein zweites selbstfahrendes Fahrzeug (10'), wobei sowohl das erste selbstfahrende Fahrzeug (10) als auch das zweite selbstfahrende Fahrzeug (10') insbesondere selbstfahrende Rasenmähroboter sind, wobei jedes von dem ersten selbstfahrenden Fahrzeug (10) und dem zweiten selbstfahrenden Fahrzeug (10') Folgendes umfasst:

    - eine Vielzahl von Rädern oder Rollen (11), die konfiguriert sind, um die Bewegung auf dem Erdboden oder Fußboden (100) zu ermöglichen,
    - einen Motor, der mit mindestens einem Rad oder einer Rolle der Vielzahl von Rädern oder Rollen (11) gekoppelt ist, um das Rad zu einem Antriebsrad oder die Rolle zu einer Antriebsrolle zu machen,
    - mindestens ein elektromagnetisches Signalempfangselement (12', 12"), das konfiguriert ist, um im Gebrauch ein elektromagnetisches Fahrsignal zu empfangen, wobei das Fahrsignal des ersten selbstfahrenden Fahrzeugs (10) ein erstes Fahrsignal (30) ist, das durch ein erstes Kabel (201) übertragen wird, das einen Bereich des Erdbodens oder Fußbodens (100) begrenzt, wobei das Fahrsignal des zweiten selbstfahrenden Fahrzeugs (10') ein zweites Fahrsignal (30') ist, das durch das erste Kabel (201) übertragen wird, das den Bereich des Erdbodens oder Fußbodens (100) begrenzt, oder durch ein zweites Kabel (201'), das einen weiteren Bereich des Erdbodens oder Fußbodens (100) begrenzt,
    - eine Empfängerstufe (12r), die funktionsfähig mit dem mindestens einen elektromagnetischen Signalempfangselement (12', 12") verbunden ist,
    - eine Datenverarbeitungseinheit (13), die funktionsfähig, optional elektrisch, mit dem elektromagnetischen Signalempfangselement (12', 12") verbunden ist, wobei die Datenverarbeitungseinheit (13) des ersten selbstfahrenden Fahrzeugs (10) konfiguriert ist, um das erste Fahrsignal (30) elektronisch zu verarbeiten, um eine Positionsbeziehung zwischen dem ersten Kabel (201) und dem ersten selbstfahrenden Fahrzeug (10) zu bestimmen, wobei die Datenverarbeitungseinheit (13) des zweiten selbstfahrenden Fahrzeugs (10') konfiguriert ist, um das zweite Fahrsignal (30') elektronisch zu verarbeiten, um eine Positionsbeziehung zwischen dem ersten Kabel (201) und dem zweiten selbstfahrenden Fahrzeug (10') oder zwischen dem zweiten Kabel (201') und dem zweiten selbstfahrenden Fahrzeug (10') zu bestimmen, **dadurch gekennzeichnet, dass** die Datenverarbeitungseinheit (13) des ersten selbstfahrenden Fahrzeugs (10) konfiguriert ist, um einen Zyklus (400) einer Aktivierung und Deaktivierung der Empfängerstufe (12r) des ersten selbstfahrenden Fahrzeugs (10) zu steuern, wobei die Steuerung des Zyklus (400) einer Aktivierung und Deaktivierung gemäß einem vorbestimmten ersten Aktivierungs- und/oder Deaktivierungskriterium voraussetzt, dass die Empfängerstufe (12r) des ersten selbstfahrenden Fahrzeugs (10) mindestens einmal innerhalb des Zyklus (400) über ein vorbestimmtes Zeitintervall (Ton) einer Aktivierung aktiviert wird und dass die Empfängerstufe (12r) des ersten selbstfahrenden Fahrzeugs (10) mindestens einmal innerhalb des Zyklus (400) über ein vorbestimmtes Zeitintervall (Toff) einer Deaktivierung deaktiviert wird, um den Empfang und/oder die elektronische Verarbeitung des ersten Fahrsignals (30) nur in dem vorbestimmten ersten Zeitintervall (Ton) einer Aktivierung zu ermöglichen,

wobei die Datenverarbeitungseinheit (13) des zweiten selbstfahrenden Fahrzeugs (10') konfiguriert ist, um einen Zyklus (400) einer Aktivierung und Deaktivierung der Empfängerstufe (12r) des zweiten selbstfahrenden Fahrzeugs (10') zu steuern, wobei die Steuerung des Zyklus (400) einer Aktivierung und Deaktivierung gemäß einem vorbestimmten zweiten Aktivierungs- und/oder Deaktivierungskriterium voraussetzt, dass die Empfängerstufe (12r) des zweiten selbstfahrenden Fahrzeugs (10') mindestens einmal innerhalb des Zyklus (400) über ein vorbestimmtes Zeitintervall (Ton) einer Aktivierung aktiviert wird und dass die Empfängerstufe (12r) des zweiten selbstfahrenden Fahrzeugs (10') mindestens einmal innerhalb des Zyklus (400) über ein vorbestimmtes Zeitintervall (Toff) einer Deaktivierung deaktiviert wird, um den Empfang und/oder die elektronische Verarbeitung des zweiten Fahrsignals (30) nur in dem vorbestimmten zweiten Zeitintervall (Ton) einer Aktivierung zu ermöglichen.

**12.** Steuerungsverfahren eines ersten selbstfahrenden Fahrzeugs (10) und eines zweiten selbstfahrenden Fahrzeugs (10'), die jeweils konfiguriert sind, um Instandhaltungsarbeiten an einem Erdboden oder Fußboden (100) durchzuführen, wobei das erste selbstfahrende Fahrzeug (10) und das zweite selbstfahrende Fahrzeug (10') insbesondere selbstfahrende Rasenmäherroboter sind, das Verfahren umfassend:

- einen Empfangsschritt (1002) eines ersten Fahrsignals (30), das durch ein erstes Kabel (201) übertragen wird, das einen Bereich des Erdbodens oder Fußbodens (100) begrenzt und geeignet ist, um, wenn es durch das erste selbstfahrende Fahrzeug (10) empfangen wird, eine Identifizierung eines durch das erste Kabel (201) definierten Arbeitsumfangs und/oder eine Bestimmung der Position des ersten selbstfahrenden Fahrzeugs (10) in dem Bereich des Erdbodens oder Fußbodens (100), der durch das erste Kabel (201) begrenzt ist, zu bewirken;
- einen Empfangsschritt (1002) eines zweiten Fahrsignals (30'), das durch das erste Kabel (201), das den Bereich des Erdbodens oder Fußbodens (100) begrenzt, oder durch ein zweites Kabel (201'), das einen weiteren Bereich des Erdbodens oder Fußbodens (100) begrenzt, übertragen wird und geeignet ist, um bei Empfang durch das zweite selbstfahrende Fahrzeug (10') eine Identifizierung eines Arbeitsumfangs, der durch das erste Kabel (201) und/oder durch das zweite Kabel (201') definiert ist, und/oder eine Bestimmung der Position des zweiten selbstfahrenden Fahrzeugs (10') in dem Bereich des Erdbodens oder Fußbodens (100), der durch das erste Kabel (201) begrenzt ist, und/oder in dem weiteren Bereich des Erdbodens oder Fußbodens (100), der durch das zweite Kabel (201') begrenzt ist, zu bewirken;
- einen Fahrschritt (1003) des ersten selbstfahrenden Fahrzeugs (10) und des zweiten selbstfahrenden Fahrzeugs (10'), umfassend mindestens einen Aktivierungsschritt mindestens eines Motors des ersten selbstfahrenden Fahrzeugs (10) und mindestens eines Motors des zweiten selbstfahrenden Fahrzeugs (10'), um eine Bewegung auf dem Erdboden oder Fußboden (100) zu bewirken,

**dadurch gekennzeichnet, dass** das Verfahren Folgendes beinhaltet:

- einen Zyklus einer Aktivierung und Deaktivierung einer Empfängerstufe (12r) des ersten selbstfahrenden Fahrzeugs (10), der Zyklus einer Aktivierung und Deaktivierung der Empfängerstufe (12r) des ersten selbstfahrenden Fahrzeugs (10) umfassend:

▪ eine zyklische Aktivierung (1001) der Empfängerstufe (12r) des ersten selbstfahrenden Fahrzeugs (10) über ein vorbestimmtes erstes Zeitintervall (Ton) einer Aktivierung und
▪ eine zyklische Deaktivierung (1004) der Empfängerstufe (12r) des ersten selbstfahrenden Fahrzeugs (10) über ein vorbestimmtes erstes Zeitintervall (Toff) einer Deaktivierung und

- einen Zyklus einer Aktivierung und Deaktivierung einer Empfängerstufe (12r) des zweiten selbstfahrenden Fahrzeugs (10), der Zyklus einer Aktivierung und Deaktivierung der Empfängerstufe (12r) des zweiten selbstfahrenden Fahrzeugs (10) umfassend:

▪ eine zyklische Aktivierung (1001) der Empfängerstufe (12r) des zweiten selbstfahrenden Fahrzeugs (10) über ein vorbestimmtes zweites Zeitintervall (Ton) einer Aktivierung und
▪ eine zyklische Deaktivierung (1004) der Empfängerstufe (12r) des zweiten selbstfahrenden Fahrzeugs (10) über ein vorbestimmtes zweites Zeitintervall (Toff) einer Deaktivierung,

wobei der Empfang und/oder das elektronische Verarbeiten des ersten Fahrsignals (30) bzw. des zweiten Ansteuerungssignals (30') nur in dem vorbestimmten ersten Zeitintervall (Ton) einer Aktivierung und nur in dem vorbestimmten zweiten Zeitintervall (Ton) einer Aktivierung zulässig sind, und
wobei die zyklische Aktivierung und die zyklische Deaktivierung der Empfängerstufe (12r) des ersten selbstfahrenden Fahrzeugs (10) und die zyklische Aktivierung und die zyklische Deaktivierung der Empfängerstufe (12r) des zweiten selbstfahrenden Fahrzeugs (10') jeweils gemäß einem vorbestimmten ersten Aktivierungs- und/oder Deaktivierungskriterium und gemäß einem vorbestimmten zweiten Aktivierungs- und/oder Deaktivierungskriterium erfolgen.

**13.** Steuerungsverfahren nach dem vorherigen Anspruch, wobei das erste Fahrsignal (30) und das zweite Ansteuerungssignal (30') von einer Steuereinheit einer für das erste selbstfahrende Fahrzeug (10) und das zweite selbstfahrende Fahrzeug (10') gemeinsamen Ladestation (200) erzeugt werden, wobei die Steuereinheit der Ladestation (200) funktionsfähig mit dem ersten Kabel (201) und möglicherweise mit der zweiten Kabel (201') verbunden ist.

14. Steuerungsverfahren nach Anspruch 12 oder 13, wobei die zyklische Aktivierung der Empfängerstufe (12r) des ersten selbstfahrenden Fahrzeugs (10) gegenüber der zyklischen Aktivierung der Empfängerstufe (12r) des zweiten selbstfahrenden Fahrzeugs (10') zeitlich versetzt, insbesondere nicht überlappend, ist.

15. Steuerungsverfahren nach einem der Ansprüche 12 bis 14, wobei das erste Zeitintervall (Ton) einer Aktivierung eine Dauer aufweist, die im Wesentlichen gleich wie das zweite Zeitintervall (Ton) einer Aktivierung ist, und wobei das erste Zeitintervall (Toff) einer Deaktivierung eine Dauer aufweist, die im Wesentlichen gleich wie das zweite Zeitintervall (Toff) einer Deaktivierung ist.

## Revendications

1. Véhicule automoteur (10) configuré pour effectuer un entretien sur un sol ou un terrain (100), en particulier une tondeuse à gazon robotisée autonome, comprenant :

   - une pluralité de roues ou de rouleaux (11), configurés pour permettre le mouvement du véhicule automoteur (10) sur ledit sol ou terrain (100),
   - un moteur couplé à au moins une roue ou un rouleau de ladite pluralité de roues ou rouleaux (11) de manière à faire de ladite roue une roue d'entraînement ou dudit rouleau un rouleau d'entraînement,
   - au moins un élément de réception de signal électromagnétique (12', 12") configuré pour recevoir, en utilisation, un signal de commande (30) de type électromagnétique, transmis à travers un fil (201) délimitant une zone dudit sol ou terrain (100),
   - un étage récepteur (12r), fonctionnellement connecté audit au moins un élément de réception de signal électromagnétique (12', 12"),
   - une unité de traitement de données (13) fonctionnellement, éventuellement électriquement, connectée à l'élément de réception de signal électromagnétique (12', 12"), et configurée pour traiter électroniquement le signal de commande (30) reçu au moyen dudit au moins un élément de réception de signal électromagnétique (12', 12") afin de déterminer une relation de position entre ledit fil (201) et le véhicule automoteur (10),

   **caractérisé en ce que** ladite unité de traitement de données (13) est configurée pour commander un cycle (400) d'activation et de désactivation dudit étage récepteur (12r), la commande dudit cycle (400) d'activation et de désactivation supposant, conformément à un critère d'activation et/ou de désactivation prédéterminé, que ledit étage récepteur (12r) est activé au moins une fois, dans ledit cycle (400), pendant un intervalle de temps prédéterminé (Ton) d'activation, et que ledit étage récepteur (12r) est désactivé au moins une fois, dans ledit cycle (400), pendant un intervalle de temps prédéterminé (Toff) de désactivation, afin de permettre la réception et/ou le traitement électronique du signal de commande (30) dans l'intervalle de temps prédéterminé (Ton) d'activation uniquement.

2. Véhicule automoteur (10) selon la revendication 1, dans lequel le signal de commande (30) comprend au moins une première partie ayant un codage d'identification (30i), en particulier un codage d'identification prédéterminé (30i), ledit codage d'identification (30i) étant configuré pour permettre une identification univoque d'une base de charge (200) transmettant ledit signal de commande (30) et/ou étant configuré pour permettre une identification univoque dudit véhicule automoteur (10) et/ou étant configuré pour permettre une identification univoque de la destination spécifique du signal de commande (30) audit véhicule automoteur (10) et/ou étant configuré pour déterminer et/ou modifier au moins l'un parmi : l'intervalle de temps prédéterminé (Toff) de désactivation, l'intervalle de temps prédéterminé (Ton) d'activation, une durée dudit cycle (400).

3. Véhicule automoteur (10) selon la revendication 2, dans lequel l'intervalle de temps prédéterminé (Ton) d'activation est suffisant pour provoquer une réception, en particulier une réception complète, d'au moins ladite première partie ayant ledit codage d'identification (30i).

4. Véhicule automoteur (10) selon une ou plusieurs des revendications précédentes, comprenant un premier élément de réception de signal électromagnétique (12') et un second élément de réception de signal électromagnétique (12"), et dans lequel l'unité de traitement de données (13) est électriquement connectée au premier élément de réception de signal électromagnétique (12') et au second élément de réception de signal électromagnétique (12', 12"), dans lequel l'étage récepteur (12r) est fonctionnellement connecté au premier élément de réception de signal électromagnétique (12') et au second élément de réception de signal électromagnétique (12") et dans lequel l'unité de traitement de données (13) est configurée pour déterminer la position du véhicule automoteur (10) par rapport audit fil (201) selon une puissance et/ou une polarité assumée au moins temporairement par le signal de commande (30), le premier élément de réception de signal électromagnétique (12') et le second élément de réception de signal électromagnétique (12") étant configurés et spécifiquement destinés à permettre à l'unité de traitement de données (13) de déterminer ladite puissance et/ou ladite polarité au moins temporairement assumée par le signal de commande (30).

5. Véhicule automoteur (10) selon une ou plusieurs des revendications précédentes, dans lequel l'unité de traitement de données (13) est configurée pour stocker une copie du codage d'identification (30i) et pour comparer électroniquement, éventuellement automatiquement, le codage d'identification (30i) reçu par l'intermédiaire du signal de commande (30) avec une copie d'un codage d'identification prédéterminé (30i), afin de définir au moins l'un de l'intervalle de temps prédéterminé (Toff) de désactivation, de l'intervalle de temps prédéterminé (Ton) d'activation et de la durée dudit cycle (400), selon une donnée électronique attachée à, ou associée à, la copie pour laquelle l'existence d'une condition d'identité a été déterminée entre le codage d'identification prédéterminé (30i) et la copie du codage d'identification prédéterminé (30i).

6. Véhicule automoteur (10) selon une ou plusieurs des revendications précédentes, dans lequel le codage d'identification (30i) contient des données relatives à une position prise par un autre véhicule automoteur (10') et l'unité de traitement de données (13) est configurée pour se déplacer et/ou pour commander un mouvement du véhicule automoteur (10') afin d'éviter une collision entre le véhicule automoteur (10) et l'autre véhicule automoteur (10') et/ou afin d'optimiser les mouvements du véhicule automoteur (10) par rapport aux mouvements de l'autre véhicule automoteur (10'), dans lequel une telle optimisation est mesurée en particulier comme une augmentation d'une efficacité dudit véhicule automoteur (10) et dudit autre véhicule automoteur (10') par rapport à une activité d'entretien respective dudit sol ou terrain (100) ou comme un incrément du sol ou terrain (100) traité par ledit véhicule automoteur (10) et par ledit autre véhicule automoteur (10') dans une unité de temps.

7. Procédé de commande d'un véhicule automoteur (10) configuré pour effectuer un entretien sur un sol ou un terrain (100), en particulier le procédé de commande d'une tondeuse à gazon robotisée autonome, ledit procédé comprenant :

   - une étape de réception (1002) d'un signal de commande (30) transmis à travers un fil (201) délimitant une zone dudit sol ou terrain (100) et pouvant provoquer, lors de sa réception par le véhicule automoteur (10), une identification d'un périmètre de travail défini par le fil (201) et/ou une détermination de la position du véhicule automoteur (10) dans la zone dudit sol ou terrain (100) délimitée par le fil (201) ;
   - une étape de commande (1003) du véhicule automoteur (10) comprenant au moins une étape d'activation d'au moins un moteur du véhicule automoteur (10) de manière à provoquer un mouvement du véhicule automoteur (10) sur ledit sol ou terrain (100),
   **caractérisé en ce que** le procédé comprend un cycle d'activation et de désactivation d'un étage récepteur (12r) du véhicule automoteur (10), le cycle d'activation et de désactivation de l'étage récepteur (12r) comprenant :

      - une activation cyclique (1001) dudit étage récepteur (12r) pendant un intervalle de temps prédéterminé (Ton) d'activation et
      - une désactivation cyclique (1004) dudit étage récepteur (12r) pendant un intervalle de temps prédéterminé (Toff) de désactivation,

   dans lequel la réception et/ou le traitement électronique du signal de commande (30) ne sont autorisés que pendant l'intervalle de temps prédéterminé (Ton) d'activation, et dans lequel l'activation cyclique et la désactivation cyclique dudit étage récepteur (12r) ont lieu selon un critère d'activation et/ou de désactivation prédéterminé.

8. Procédé selon la revendication 7, comprenant une étape de génération d'au moins une première partie dudit signal de commande (30) ayant un codage d'identification (30i), en particulier un codage d'identification prédéterminé (30i), ledit codage d'identification (30i) étant configuré pour permettre une identification univoque d'une base de charge (200) transmettant ledit signal de commande (30) et/ou étant configuré pour permettre une identification univoque dudit véhicule automoteur (10) et/ou étant configuré pour permettre une identification univoque de la destination spécifique du signal de commande (30) audit véhicule automoteur (10) et/ou étant configuré pour déterminer et/ou modifier au moins l'un parmi : l'intervalle de temps prédéterminé (Toff) de désactivation, l'intervalle de temps prédéterminé (Ton) d'activation, une durée dudit cycle (400).

9. Procédé selon la revendication 8, dans lequel l'activation cyclique (1001) de l'étage récepteur (12r) a lieu pendant un intervalle de temps prédéterminé (Ton) d'activation suffisant pour provoquer une réception, en particulier une réception complète, de ladite première partie ayant ledit codage d'identification (30i).

10. Procédé selon une ou plusieurs des revendications 7 à 9, le procédé comprenant, à la suite de l'étape de réception du signal de commande (30), une comparaison électronique, éventuellement automatique, entre le codage d'identification prédéterminé (30i), et une copie d'un codage d'identification prédéterminé (30i), stockée dans une mémoire accessible de manière opérationnelle à l'unité de traitement de données (13),

dans lequel, si ladite comparaison électronique détermine une identité, le procédé comprend une étape de mise en place d'au moins une entre l'intervalle de temps prédéterminé (Toff) de désactivation, l'intervalle de temps prédéterminé (Ton) d'activation et la durée dudit cycle (400), en fonction d'une donnée électronique attachée ou associée à la copie pour laquelle l'existence d'une condition d'identité a été déterminée entre le codage d'identification prédéterminé (30i) et la copie du codage d'identification prédéterminé (30i) et/ou

dans lequel le codage d'identification (30i) contient des données relatives à une position prise par un autre véhicule automoteur (10') et le procédé comprend un déplacement et/ou une commande du mouvement du véhicule automoteur (10) de sorte qu'une collision entre le véhicule automoteur (10) et l'autre véhicule automoteur (10') est évitée et/ou de sorte que les mouvements du véhicule automoteur (10) sont optimisés par rapport aux mouvements de l'autre véhicule automoteur (10'), dans lequel cette optimisation est en particulier mesurée comme une augmentation d'une efficacité dudit véhicule automoteur (10) et dudit autre véhicule automoteur (10') par rapport à une activité d'entretien respective dudit sol ou terrain (100) ou comme un incrément du sol ou terrain (100) traité par ledit véhicule automoteur (10) et par ledit autre véhicule automoteur (10') dans une unité de temps et/ou

dans lequel ledit procédé comprend en outre une étape de réception du signal de commande (30) sur un premier élément de réception de signal électromagnétique (12') et sur un second élément de réception de signal électromagnétique (12") du véhicule automoteur (10), ledit premier élément de réception de signal électromagnétique (12') et ledit second élément de réception de signal électromagnétique (12") étant connectés de manière opérationnelle à l'étage récepteur (12r) et une étape de détermination électronique d'une position du véhicule automoteur (10) par rapport au fil (201) selon une puissance et/ou une polarité assumées au moins temporairement par le signal de commande (30), la puissance et/ou la polarité au moins temporairement assumées par le signal de commande (30) étant déterminées par le premier élément de réception de signal électromagnétique (12') et le second élément de réception de signal électromagnétique (12").

11. Système d'entretien pour un sol ou un terrain (100), ledit système comprenant au moins un premier véhicule automoteur (10) et un second véhicule automoteur (10'), le premier véhicule automoteur (10) et le second véhicule automoteur (10') étant en particulier des tondeuses à gazon robotisées autonomes, dans lequel chacun du premier véhicule automoteur (10) et du second véhicule automoteur (10') comprend :

- une pluralité de roues ou rouleaux (11), configurés pour permettre le mouvement sur ledit sol ou terrain (100),
- un moteur couplé à au moins une roue ou un rouleau de ladite pluralité de roues ou rouleaux (11) de manière à faire de ladite roue une roue d'entraînement ou dudit rouleau un rouleau d'entraînement,
- au moins un élément de réception de signal électromagnétique (12', 12") configuré pour recevoir, en utilisation, un signal de commande électromagnétique, le signal de commande dudit premier véhicule automoteur (10) étant un premier signal de commande (30) transmis à travers un premier fil (201) délimitant une zone dudit sol ou terrain (100), le signal de commande dudit second véhicule automoteur (10') étant un second signal de commande (30') transmis à travers ledit premier fil (201) délimitant ladite zone dudit sol ou terrain (100) ou à travers un second fil (201') délimitant une autre zone dudit sol ou terrain (100),
- un étage récepteur (12r), fonctionnellement connecté audit au moins un élément de réception de signal électromagnétique (12', 12"),
- une unité de traitement de données (13) fonctionnellement, éventuellement électriquement, connectée à l'élément de réception de signal électromagnétique (12', 12"), l'unité de traitement de données (13) dudit premier véhicule automoteur (10) étant configurée pour traiter électroniquement le premier signal de commande (30) afin de déterminer une relation de position entre ledit premier fil (201) et le premier véhicule automoteur (10), l'unité de traitement de données (13) dudit second véhicule automoteur (10') étant configurée pour traiter électroniquement le second signal de commande (30') afin de déterminer une relation de position entre ledit premier fil (201) et le second véhicule automoteur (10') ou entre ledit second fil (201') et le second véhicule automoteur (10'),
**caractérisé en ce que** ladite unité de traitement de données (13) dudit premier véhicule automoteur (10) est configurée pour commander un cycle (400) d'activation et de désactivation dudit étage récepteur (12r) dudit premier véhicule automoteur (10), la commande dudit cycle (400) d'activation et de désactivation supposant, conformément à un premier critère d'activation et/ou de désactivation prédéterminé, que ledit étage récepteur (12r) dudit premier véhicule automoteur (10) soit activé au moins une fois, dans ledit cycle (400), pendant un premier intervalle de temps prédéterminé (Ton) d'activation et que ledit étage récepteur (12r) dudit premier véhicule automoteur (10) soit désactivé au moins une fois, dans ledit cycle (400), pendant un premier intervalle de temps prédéterminé (Toff) de désactivation, afin de permettre la réception et/ou le traitement électronique du premier signal de commande (30) uniquement dans le premier intervalle de temps prédéterminé (Ton) d'activation,

dans lequel ladite unité de traitement de données (13) dudit second véhicule automoteur (10') est configurée pour commander un cycle (400) d'activation et de désactivation dudit étage récepteur (12r) dudit second véhicule automoteur (10'), la commande dudit cycle (400) d'activation et de désactivation supposant, conformément à un second critère d'activation et/ou de désactivation prédéterminé, que ledit étage récepteur (12r) dudit second véhicule automoteur (10') est activé au moins une fois, dans ledit cycle (400), pour un second intervalle de temps prédéterminé (Ton) d'activation et que ledit étage récepteur (12r) dudit second véhicule automoteur (10') est désactivé au moins une fois, dans ledit cycle (400), pour un second intervalle de temps prédéterminé (Toff) de désactivation, afin de permettre la réception et/ou le traitement électronique du second signal de commande (30') uniquement dans le second intervalle de temps prédéterminé (Ton) d'activation.

12. Procédé de commande d'un premier véhicule automoteur (10) et d'un second véhicule automoteur (10') configurés chacun pour effectuer un entretien sur un sol ou un terrain (100), le premier véhicule automoteur (10) et le second véhicule automoteur (10') étant en particulier des tondeuses à gazon robotisées autonomes, le procédé comprenant les étapes suivantes :

- une étape de réception (1002) d'un premier signal de commande (30) transmis à travers un premier fil (201) délimitant une zone dudit sol ou terrain (100) et pouvant provoquer, lors de sa réception par le premier véhicule automoteur (10), une identification d'un périmètre de travail défini par le premier fil (201) et/ou une détermination de la position du premier véhicule automoteur (10) dans la zone dudit sol ou terrain (100) délimitée par le premier fil (201) ;

- une étape de réception (1002) d'un second signal de commande (30') transmis à travers ledit premier fil (201) délimitant ladite zone dudit sol ou terrain (100) ou à travers un second fil (201') délimitant une autre zone dudit sol ou terrain (100) et pouvant provoquer, lors de sa réception par le second véhicule automoteur (10'), une identification d'un périmètre de travail défini par le premier fil (201) et/ou par le second fil (201') et/ou une détermination de la position du second véhicule automoteur (10') dans la zone dudit sol ou terrain (100) délimitée par le premier fil (201) et/ou dans l'autre zone dudit sol ou terrain (100) délimitée par le second fil (201') ;

- une étape de commande (1003) du premier véhicule automoteur (10) et du second véhicule automoteur (10') comprenant au moins une étape d'activation d'au moins un moteur du premier véhicule automoteur (10) et d'au moins un moteur du second véhicule automoteur (10') afin de provoquer une mobilité sur ledit sol ou terrain (100),

**caractérisé en ce que** le procédé comprend :

- un cycle d'activation et de désactivation d'un étage récepteur (12r) du premier véhicule automoteur (10), le cycle d'activation et de désactivation de l'étage récepteur (12r) du premier véhicule automoteur (10) comprenant :

   ▪ une activation cyclique (1001) dudit étage récepteur (12r) du premier véhicule automoteur (10) pendant un premier intervalle de temps prédéterminé (Ton) d'activation et
   ▪ une désactivation cyclique (1004) dudit étage récepteur (12r) du premier véhicule automoteur (10) pendant un premier intervalle de temps prédéterminé (Toff) de désactivation et

- un cycle d'activation et de désactivation d'un étage récepteur (12r) du second véhicule automoteur (10'), le cycle d'activation et de désactivation de l'étage récepteur (12r) du second véhicule automoteur (10') comprenant :

   ▪ une activation cyclique (1001) dudit étage récepteur (12r) du second véhicule automoteur (10') pendant un second intervalle de temps prédéterminé (Ton) d'activation et

■ une désactivation cyclique (1004) dudit étage récepteur (12r) du second véhicule automoteur (10') pendant un second intervalle de temps prédéterminé (Toff) de désactivation,

dans lequel la réception et/ou le traitement électronique du premier signal de commande (30) et du second signal de commande (30') sont autorisés, respectivement, dans le premier intervalle de temps prédéterminé (Ton) d'activation uniquement et dans le second intervalle de temps prédéterminé (Ton) d'activation uniquement, et

dans lequel l'activation cyclique et la désactivation cyclique dudit étage récepteur (12r) du premier véhicule automoteur (10) et l'activation cyclique et la désactivation cyclique dudit étage récepteur (12r) du second véhicule automoteur (10') ont lieu, respectivement, selon un premier critère d'activation et/ou de désactivation prédéterminé et selon un second critère d'activation et/ou de désactivation prédéterminé.

13. Procédé de commande selon la revendication précédente, dans lequel ledit premier signal de commande (30) et ledit second signal de commande (30') sont générés par une unité de commande d'une base de charge (200) partagée pour ledit premier véhicule automoteur (10) et ledit second véhicule automoteur (10'), ladite unité de commande de ladite base de charge (200) étant fonctionnellement connectée audit premier fil (201) et éventuellement audit second fil (201').

14. Procédé de commande selon la revendication 12 ou la revendication 13, dans lequel l'activation cyclique de l'étage récepteur (12r) du premier véhicule automoteur (10) est décalée temporellement, en particulier sans chevauchement, par rapport à l'activation cyclique de l'étage récepteur (12r) du second véhicule automoteur (10').

15. Procédé de commande selon l'une quelconque des revendications 12 à 14, dans lequel ledit premier intervalle de temps (Ton) d'activation a une durée sensiblement égale audit second intervalle de temps (Ton) d'activation et dans lequel ledit premier intervalle de temps (Toff) de désactivation a une durée sensiblement égale audit second intervalle de temps (Toff) de désactivation.

FIG.1

EP 4 079 134 B1

FIG.2

FIG.3

400

30i

$T_{on}$ $T_{off}$ $T_{on}$ $T_{off}$

30

(201)

30i

(201')

30'

CH1

$T_{on}$ $T_{off}$

CH2

$T_{off}$ $T_{on}$

FIG.4

200

100

30

201

10

200s

100'

200'

30'

201'

10'

EP 4 079 134 B1

## FIG.5

```
┌─────────────────────────────┐
│  RECEIVER STAGE ACTIVATION  │
│    FOR TIME INTERVAL Ton     │  ── 1001
└─────────────────────────────┘
              │
              ▼
┌─────────────────────────────┐
│                             │
│   DRIVING SIGNAL RECEPTION  │  ── 1002
│                             │
└─────────────────────────────┘
              │
              ▼
┌─────────────────────────────┐
│    SELF-PROPELLED VEHICLE   │
│           CONTROL           │  ── 1003
└─────────────────────────────┘
              │
              ▼
┌─────────────────────────────┐
│ RECEIVER STAGE DEACTIVATION │
│   FOR TIME INTERVAL Toff     │  ── 1004
└─────────────────────────────┘
```

1001 — RECEIVER STAGE ACTIVATION FOR TIME INTERVAL $T_{on}$

1002 — DRIVING SIGNAL RECEPTION

1003 — SELF-PROPELLED VEHICLE CONTROL

1004 — RECEIVER STAGE DEACTIVATION FOR TIME INTERVAL $T_{off}$

FIG.6

EP 4 079 134 B1

FIG.7

FIG.8

EP 4 079 134 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3794921 A1

- EP 3689620 A